(19) Europäisches Patentamt
European Patent Office
Office européen des brevets

(11) Publication number: **0 287 216 B1**

(12) **EUROPEAN PATENT SPECIFICATION**

(45) Date of publication of patent specification: **12.08.92**

(51) Int. Cl.5: **B29C 71/00**, B29C 59/16, B29C 71/04, C08J 7/00

(21) Application number: **88302251.9**

(22) Date of filing: **15.03.88**

(54) **Surface modification of semicrystalline polymers.**

(30) Priority: **16.03.87 US 25874**

(43) Date of publication of application:
**19.10.88 Bulletin 88/42**

(45) Publication of the grant of the patent:
**12.08.92 Bulletin 92/33**

(84) Designated Contracting States:
**BE DE ES FR GB IT NL SE**

(56) References cited:
**EP-A- 0 171 181**
**EP-A- 0 233 755**
**DE-A- 2 816 856**
**FR-A- 2 210 492**

(73) Proprietor: **MINNESOTA MINING AND MANUFACTURING COMPANY**
**3M Center, P.O. Box 33427**
**St. Paul, Minnesota 55133-3427(US)**

(72) Inventor: **Ouderkirk, Andrew J. c/o Minnesota Mining and Manufacturing Company 2501 Hudson Road P.O. Box 33427 St. Paul Minnesota 55133(US)**
Inventor: **Dunn, Douglas S. c/o Minnesota Mining and Manufacturing Company 2501 Hudson Road P.O. Box 33427 St. Paul Minnesota 55133(US)**
Inventor: **Simpson, John T. c/o Minnesota Mining and Manufacturing Company 2501 Hudson Road P.O. Box 33427 St. Paul Minnesota 55133(US)**
Inventor: **Incremona, Joseph H. c/o Minnesota Mining and Manufacturing Company 2501 Hudson Road P.O. Box 33427 St. Paul Minnesota 55133(US)**
Inventor: **Warner, Robert W. c/o Minnesota Mining and Manufacturing Company 2501 Hudson Road P.O. Box 33427 St. Paul Minnesota 55133(US)**
Inventor: **Aamodt, Arthur A. c/o Minnesota Mining and Manufacturing Company 2501 Hudson Road P.O. Box 33427 St. Paul Minnesota 55133(US)**
Inventor: **Wilson, Vernon H. c/o Minnesota Mining and Manufacturing Company 2501 Hudson Road P.O. Box 33427 St. Paul Minnesota 55133(US)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services

Inventor: **Shinbach, Madeline P. c/o Minnesota Mining and**
**Manufacturing Company 2501 Hudson Road**
**P.O. Box 33427 St. Paul Minnesota 55133(US)**
Inventor: **Smith, Samuel c/o Minnesota Mining and**
**Manufacturing Company 2501 Hudson Road**
**P.O. Box 33427 St. Paul Minnesota 55133(US)**
Inventor: **Yorkgitis, Elaine M. c/o Minnesota Mining and**
**Manufacturing Company 2501 Hudson Road**
**P.O. Box 33427 St. Paul Minnesota 55133(US)**

(74) Representative: **Baillie, Iain Cameron et al**
**c/o Ladas & Parry, Altheimer Eck 2**
**W-8000 München 2(DE)**

## Description

### BACKGROUND OF THE INVENTION

#### 1. Field of the Invention

The present invention relates to semicrystalline polymeric materials and particularly to semicrystalline polymeric materials having a quasi-amorphous surface layer of the same or similar polymeric material. The present invention also relates to a process of irradiation of semi-crystalline polymeric surfaces to generate a quasi-amorphous surface layer thereon.

#### 2. Background of the Art

The effects of actinic radiation on the degradation of polymer surfaces have been studied for many years. Prior to about 1970, this work was done with low intensity photolamps at wavelengths greater than 220 nanometers (nm). Numerous papers are available in the literature, typical of which are Day and Wiles, Journal of Applied Polymer Science, 16 175 (1972), and Blais, Day and Wiles, Journal of Applied Polymer Science, 17 p. 1895 (1973).

Between 1970 and 1980 the effects on polymer surfaces of ultra-violet (UV) lamos with wavelengths less than 220 nm were studied for lithography and surface modification purposes. Such studies are exemplified by Mimura et al., Japanese Journal of Applied Physics, 17 541 (1978). This work illustrates that long exposure times and high energies are required to cause photo-etching when UV lamps are used. U.S. Patent No. 3,978,341 (Hoell) teaches an apparatus for exposing polymeric contact lenses to a spark discharge producing 83 nm to 133.5 nm U.V. radiation to improve the wettability and adhesiveness of the lenses.

In 1975 the excimer laser was discovered. An excimer laser is an excited dimer laser where two normally non-reactive gases (for example Krypton, Kr, and Fluorine, $F_2$) are exposed to an electrical discharge. One of the gases (Kr) is energized into an excited state (Kr*) in which it can combine with the other gas ($F_2$) to form an excited compound (KrF*). This compound gives off a photon and drops to an unexcited state which, being unstable, immediately disassociates to the original gases (Kr and $F_2$) and the process is repeated. The released photon is the laser output. The uniqueness of the excimer laser is its high efficiency in producing short wavelength (UV) light and its short pulses widths. These attributes make the excimer laser useful for industrial applications. Kawamura et al., Applied Physics Letters, 40 374 (1982) reported the use of a KrF excimer laser at 248 nm wavelengths to photo-etch polymethyl methacrylate (PMMA), a polymer used in preparing photolithography resists for semiconductor fabrication.

U.S. Patent No. 4,414,059 (Blum, Brown and Srinivasan) disclosed a technique for the manufacture of microelectronic devices utilizing ablative photodecomposition of lithography resist amorphous polymers at wavelengths less than 220 nm and power densities sufficient to cause polymer chain fragmentation and immediate escape of the fragmented portions. The photodecomposition leaves an etched surface. The authors found that using an ArF excimer laser at 193 nm and with a 12 nanosecond pulse width, a threshold for ablatively photo decomposing poly(methylmethacrylate) resist material occurs at about a fluence of 10-12 $mJ/cm^2$/pulse. It is stated that large amounts of energy, greater than the threshold amount, must be applied before ablation will occur. The energy used must be 1) sufficiently great and 2) applied in a very short amount of time to produce ablative photodecomposition.

U.S. Patent No. 4,417,948 (Mayne-Banton) and Srinivasan) and a related publication, Srinivasan and Leigh, Journal American Chemical Society, 104 6784 (1982) teach a method of UV photo etching poly-(ethylene terephthalate) (PET). In these publications the authors indicate the mechanism of photo etching to be one of chain scission or bond breaking of surface polymer molecules by the high energy UV. Bond breaking continues in the presence of irradiation and the smaller units continue to absorb radiation and break into still smaller units until the end products vaporize and carry away any excess photon energy. This process results in small particles being ablated away, and various gases being evolved. The remaining surface material comprises molecules of low molecular weight (oligomers). Examining the PET repeating unit and the author's claim of bond scission, it is believed that the following occurs:

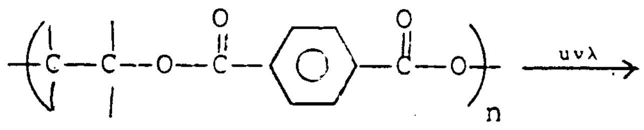


$CO$, $CO_2$, plus mixture of simple organic compounds and low molecular weight oligomers

Indeed, in the Journal of the American Chemical Society article, the authors analyze for benzene and start detecting it at about the threshold for photodecomposition for PET; i.e., about 20mJ/cm$^2$/pulse at 193 nm. The authors also indicate that the photo etch process is accelerated in the presence of oxygen which seals the ends of the broken chain's fragments and prevents recombination of these fragments.

Srinivasan, Journal of the Vacuum Society, B1, 923 (1983) reports the results of ablative photodecomposition of organic polymers through a 0.048 cm diameter mask and states that a threshold exists for the onset of ablation and, for PMMA, that the threshold is 10mJ/cm$^2$/pulse. He then goes on to state that one pulse at 16mJ/cm$^2$ gave an etch mark on PMMA while 50 pulses at 4mJ/cm$^2$/pulse left no detectable etch marks. For PET and polyimide, the threshold began at about 30mJ/cm$^2$/pulse. However, for a satisfactory etch pattern the optimum fluence ranged from 100 to 350mJ/cm$^2$/pulse.

In Srinivasan and Lazare, Polymer, 26, 1297 (1985) Conference Issue, the authors report the photo etching of 6 X 12 mm samples of PET, PMMA and polyimide polymers with both continuous radiation at 185 nm from UV lamps and pulsed radiation at 193 nm from an excimer laser. The use of continuous low energy UV lamps causes photo oxidation of the polymer surface with a resultant increased oxygen to carbon ratio (O/C ratio) as determined by x-ray photoelectron spectroscopy (XPS) equipment, while the use of a pulsed high energy excimer laser, which produces chain scission in and ablation of the polymer surface, resulted in a lower O/C ratio as determined by XPS. The authors then go on to say " It may be pointed out that ablative photo decomposition is not exactly a method for the modification of a polymer surface at an atomic level since it totally eliminates the atoms at the surface and creates a fresh surface."

U.S. Patent No. 3,607,354 discloses the use of highly active hydroxybenzene solvents to deluster the surface of an oriented poly(ethylene terephthalate) film. The solvent acts to dissolve and swell the poly-(ethylene terephthalate) and remains in the surface layer. The chemical composition of the surface layer is different from that of the bulk polymer because of the presence of the very active solvents at the time that the film is coated. The delustering may in fact indicate that crystalline spherulites of such a large size are produced that they scatter light.

U.S. Patent No. 4,568,632 (Blum, Holloway and Srinivasan) claims a method for photo etching polyimides. The process described uses a pulsed excimer laser at 193 nm. The stated incident energy required for photo ablation is much higher for polyimide than for PET. The value for the laser fluence threshold of PET was reported as about 30 mJ/cm$^2$ pulse while for polyimide it was reported as about 50 mJ/cm$^2$/pulse. An operative level was noted as about 50-100 mJ/cm$^2$/pulse for PET and 100-300 mJ/cm$^2$/pulse for polyimide. The etch rate found for PET was 100 nm (1000 Angstroms) for a fluence of 100-300 mJ/cm$^2$/pulse and for the polyimide was 75 nm (750 Angstroms) for 350 mJ/cm$^2$/pulse.

Lazare and Srinivasan, Journal Physical Chemistry, 90, 2124 (1986) report on the study of surface properties of PET which have been modified by either pulsed UV laser radiation or continuous UV lamp radiation. The authors report on the high fluence ablation of PET as follows: 1) the PET irradiated surface is a layer of low molecular weight material, 2) the surface has a rough chemically homogeneous texture, 3) the surface has a high chemical reactivity characteristic of oligomers, and 4) the surface could be removed by washing in acetone. Since extremely low molecular weight fragments (oligomers) of PET are soluble in acetone, the authors assert this removal of the treated surface is indicative of the presence of low molecular weight material on the surface. The authors also report that the low intensity UV lamp treated PET surfaces would not wash off with acetone. This later article reports thresholds for ablation of PET at about 30-40 mJ/cm$^2$/pulse.

Japanese Patent Publications JP-A-59-82380, JP-A-59-101937 and JP-A-59-101938 (Kitamura, Veno and Nomura) describe the treatment of various polymers with many pulses from moderately high energy lasers for the purpose of increasing adhesion and forming a barrier layer to prevent plasticizer migration from within certain polymers.

Bishop and Dyer, Applied Physics Letters, 47, 1229 (1985) extended the photoablation etching work of others to actually cutting through or slitting the polymer film by increasing the energy density of the laser beam by concentrating it at the film surface.

The authors of the above references were studying the photodecomposition or photoablation process of UV radiation on polymer surfaces, without regard to whether the polymer was semi-crystalline or amorphous. The present invention does not produce substantial photodecomposition and little or no photoablation, and is concerned only with semicrystalline polymer surfaces produced by exposure to an energy regime different from those used in the prior art.

"Polymer Interface and Adhesion", Souheng Wu, Published by Marcel Dekker, Inc., N.Y. and Basel, Chapter 5, page 206 indicates that when a polymer melt cools and solidifies, an amorphous surface is usually formed, although its bulk phase may be semicrystalline. This is at least in part a result of fractions not accomodated in the crystalline structure being rejected to the surface. This amorphous surface is not recrystallizable because of the presence of the fractions and is believed to be extremely thin, corresponding to only a few layers of molecules, and is of the order of no more than 2 or 3 nm, and is generally less than 2 nm in thickness.

U.K. Patent No. 1,579,002 discloses vacuum glow discharge treatment of polymeric surfaces to increase adhesion to that surface. The glow discharge (i.e., corona type discharge) in the vacuum reduces the yellowing typically resulting from corona discharge treatment by 75 to 80%. The surfaces are heated to a temperature below the glass transition temperature or melting point during glow discharge treatment.

U.S. Patent 3,081,485 describes a process for heating and softening polymeric materials using electron-beam irradiation so that further mechanical treatment such as stretching and coating can be carried out. The energy densities used (e.g., column 2, line 15) are about two orders of magnitude higher than the energy densities used in the present invention. The energy levels described in U.S. 3,081,485 would cause ablation. The authors note on column 2, lines 26 ff. that small traces of irradiated material are evaporated during irradiation. Although the patent describes surface heating, the immediate depth of e-beam penetration (see column 3) appears to be greater than 150 µm (microns). This form of energy would have equal effects on the bulk polymer and would not cause only surface modifications.

U.S. Patent No. 4,631,155 describes the surface modification of polymers by subjecting the surface to at least one pulse of intense electromagnetic radiation. The surface polymer is disoriented during the relatively long exposure to radiation. Disorientation is indicative of an amorphous surface. Very thick layers appear to be formed as indicated by the chloroform test described in column 5. It is also very likely that the conditions described in the patent will cause chemical changes in the surface.

EP-A-0 233 755 (Amoco) (published after March 16, 1987) discloses the preparation of surfaces of molded products for improved bonding and painting performance for example whereby the surface of the molded products are scanned with ultraviolet radiation to effect substantially complete fragmentation of mold-release agents which are then removed. There is no molecular reorientation of the surface into the quasi-amorphous state.

EP-A-0 171 181 (3M Company) discloses an adhesion promoting treatment of polyester film base which is free from toxic hazard. Biaxially orientated film is exposed to irradiation by an electron beam, on at least one surface to promote adhesion to either or both surfaces. If adhesion is to be promoted on both surfaces the entire film must undergo molecular recrientation into an amorphous state, so the quasi-amorphous state is not disclosed.

## SUMMARY OF THE INVENTION

The present invention provides an amorphized surface layer on semicrystalline polymers and a method for producing such a quasi-amorphous surface. Some of the special properties in semicrystalline polymers obtainable by this invention are reduced optical reflectance and increased optical transmission, increased coating adhesion, increased auto-adhesion, a non-yellowed (non-degraded) surface, a non-textured (non-ablated) surface and an enhanced ability for e-beam grafting of other polymers to the surface. The polymeric article comprises a semicrystalline polymer having on at least one surface thereof areas having a depth of at least 5 nm of the same polymer composition in a quasi-amorphous state. The areas may be continuous or discontinuous.

The present invention provides a process for forming an amorphized surface layer on semicrystalline polymers. Some of the special properties in semicrystalline polymers obtainable by the process of this invention are reduced optical reflectance and increased optical transmission, increased coating adhesion, increased auto-adhesion, a non-yellowed (non-degraded) surface, a non-textured (non-ablated) surface and an enhanced ability for e-beam grafting of other polymers to the surface. The polymeric article comprises a

semicrystalline polymer having on at least one surface thereof areas having a depth of at least 5 nm of the same polymer composition in a quasi-amorphous state. Tie areas may be continuous or discontinuous.

## BRIEF DESCRIPTION OF THE DRAWING

The Figure shows a chart which indicates the relationship of bond strengths to the number of pulses/fluence of modifying radiation.

## DETAILED DESCRIPTION OF THE DRAWING

The Figure graphically shows the effects of surface modification according to the present invention and shows effects of other known processes on properties on poly(ethylene terephthalate) film.

The diagonal line represents constant energy density. That is, the number of pulses multiplied by the energy per pulse remains constant along that line. The shaded area (1) shows microtexturing of the surface which occurs with ablation and etching techniques. This tends to produce high bond strengths. The crosshatched area (2) shows surface modification according to the present invention wherein the properties of the surface can be controlled between strong (greater than 787 g/linear cm (2000 g/linear inch)), medium 393 - 787 g/linear cm (1000-2000 g/linear inch) and weak 0 - 393 g/linear cm (0-1000 g/linear inch) bonds. These bond strengths are for autoadhesion of the surfaces.

## DETAILED DESCRIPTION OF THE INVENTION

The present invention provides a unique amorphized surface layer on a semicrystalline polymer, formed by the irradiation of the polymer by radiation which is strongly absorbed by the polymer and of sufficient intensity and fluence to cause such an amorphized layer. The semicrystalline polymer surface is thus altered into a new quasi-amorphous composition of matter by radiation such as an intense short pulse UV excimer laser or short pulse duration, high intensity UV flashlamp.

The present invention provides a process for the formation of a unique amorphized surface layer on a semicrystalline polymer. The process is the irradiation of the polymer by radiation which is strongly absorbed by the polymer and of sufficient intensity and fluence to cause such amorphized layer. The semicrystalline polymer surface is thus altered into a new morphological state by radiation such as an intense short pulse UV excimer laser or short pulse duration, high intensity UV flashlamp.

The present invention also provides a process for heat sealing at least one amorphized surface layer on semicrystalline polymers to another surface. Some of the special properties in the preferred semicrystalline polymers used in this invention are reduced optical reflectance and increased optical transmission, increased coating adhesion, increased auto-adhesion, and a non-yellowed (non-degraded) surface. The preferred polymeric article used in the present invention comprises a semicrystalline polymer having on at least one surface thereof areas having a depth of at least 5 nm of the same polymer composition in a quasi-amorphous state. The areas may be continuous or discontinuous.

The present invention also provides an amorphized surface layer on semicrystalline polymers, this surface being particularly suitable for use in forming images. The quasi-amorphous surface can be coated with inks, varnishes, paints, dyes, pigments, or other optical density containing materials. These coatings will display very strong adherence to the polymer surface. Where there is an imagewise distribution of material, the background areas remain about the same color as the original polymer before the surface treatment. The polymeric article comprises a semicrystalline polymer having on at least one surface thereof areas having a depth of at least 5 nm of the same polymer composition in a quasi-amorphous state, and an optical density bearing coating thereon.

The quasi-amorphous surface layer or areas produced according to the practice of the present invention are generally and preferably substantially, essentially, or even totally free of polymeric decomposition debris which typically results from ablative processes as described in U.S. Patent No. 4,417,948 and the articles of Srinivasan et al. noted above.

The residual debris would be organic material having a lower oxygen/carbon ratio than the bulk polymer. Even if not visually observable in the amounts present, the debris itself would be yellower in color than the bulk material and would be more highly conjugated. The debris also tends to leave microscopically observable (at least 10,000X, preferably 20,000X) artifacts on the surface. With respect to poly(ethylene terephthalate), ablation produces a surface substantially soluble in acetone, while the preferred quasi-amorphous surface is not soluble in acetone.

In understanding the present invention, a number of terms and concepts should be appreciated. The

treatment of the surface of semicrystalline polymeric materials according to the present invention does not add or substantially remove material from the surface. Residual solvent or residual low molecular weight reactants and additives may be volatilized during this treatment, but there is usually less than 0.1% or 1% degradation (to a volatile state) and/or volatilization of the bulk of polymeric material within the amorphized zone having a molecular weight in excess of 10,000. The chemical modification of the polymer surface (e.g., oxidation, chain breakage) is minimal if there is any at all. Only a small amount of chain breakage occurs, without the generation of significant amounts (i.e., greater than 0.1% or 1% by bulk weight) of materials volatilized during the process.

The terms amorphous, crystalline, semicrystalline, and orientation are commonly used in the description of polymeric materials. The true amorphous state is considered to be a randomly tangled mass of polymer chains. The X-ray diffraction pattern of an amorphous polymer is a diffuse halo indicative of no regularity of the polymer structure. Amorphous polymers show softening behavior at the glass transition temperature, but no true melt or first order transition.

The semicrystalline state of polymers is one in which long segments of the polymer chains appear in both amorphous and crystalline states or phases. The crystalline phase comprises multiple lattices in which the polymer chain assumes a chain-folded conformation in which there is a highly ordered registry in adjacent folds of the various chemical moieties of which the chain is constructed. The packing arrangement (short order orientation) within the lattice is highly regular in both its chemical and geometric aspects. Semicrystalline polymers show characteristic melting points, above which the crystalline lattices become disordered and rapidly lose their identity. The X-ray diffraction pattern of semicrystalline polymers (or copolymers) generally is distinguished by either concentric rings or a symmetrical array of spots, which are indicative of the nature of the crystalline order.

Orientation of the polymer is the directional alignment of the polymer chain (long order) or segments of the polymer (chain) within the polymer composition. In the quasi-amorphous state described in the practice of the present invention, it appears that the overall long order orientation or ordering of the crystal lattice remains in an apparent crystalline orientation. It also appears that there is, however, significant localized disordering along the chain (short order orientation). The quasi-amorphous form thus exhibits short order non-orientation or low orientation typical of amorphous phases while it exhibits long-range ordering typical of crystalline structures. These characteristics are observable and determinable by single analytic techniques or combinations of techniques such as X-ray diffractions, spectromicrophotometry, IRRAS, NMR and, solvent extraction.

The surface of the semicrystalline polymer is converted into its quasi-amorphous form by heating and rapid cooling of a determined amount of that surface. A determinable depth of the polymer composition is converted to the quasi-amorphous state. The conversion is referred to as "amorphizing." The thickness of the amorphized polymer, as measured from the surface downward into the bulk of the polymer, can be controlled. The polymer usually has a quasi-amorphous top surface having a depth of at least 5 nm, preferably at least 10 nm, more preferably at least 40 nm and most preferably at least 60 nm. The range of thickness for the quasi-amorphous phase or surface of the polymer may be from about 5 to 10,000 nm, preferably 10 to 1,000 nm, more preferably 20 to 500 nm or 20 to 100 nm and most preferably 20 to 250 nm, depending upon the ultimate use of the article.

The surface quasi-amorphous layer is firmly adhered to the bulk of the semicrystalline polymer because of the in situ nature of the conversion. There can even be a discernible gradation zone between the quasi-amorphous and semicrystalline areas, although this is not always the case. That is, the transition can be very abrupt within the polymer.

The portion of the surface area which is amorphized may be as small as 1% with some beneficial effects being noted. Generally it is at least 10%, and preferably 50 to 100% of the surface. More preferably at least 80% or 90 to 100% of the surface is quasi-amorphous. These are percentages by surface area.

In performing the process of making the quasi-amorphous surfaces of the present invention, the wavelength of the light or ultraviolet radiation and/or the polymer and/or absorbing dye in the polymer should be chosen so that the polymer composition exhibits an extinction coefficient greater than about 5,000. The polymer composition should exhibit an alternative description of an absorptivity coefficient greater than about 1/micrometer or 5/micrometer. The higher the extinction coefficient for any given wavelength, the thinner is the effective surface layer which resides in the optical path of the radiation, and correspondingly, the thinner is the surface layer which undergoes a morphological transition or "amorphization". The wavelength range of preferred interest is between about 180 and 260 nm, with the highest extinction coefficient being manifested at the shorter wavelengths. Preferably a coefficient of extinction of at least 10,000 is exhibited by the polymer at the wavelength of irradiation.

When utilizing ultraviolet radiation (e.g., 193 nm), it is desired that the polyester film receives energy

corresponding to a fluence of 3-25 mJ/cm$^2$/pulse. At fluences of less than 3 mJ/cm$^2$/pulse, the effect of the radiation is not readily discerned. At fluences greater than 25 mJ/cm$^2$/pulse, one begins to encounter excessive damage to the affected surface layer, such as vaporization (e.g., off-gassing) of low molecular weight products of photodegradation, substantial reduction of the molecular weight of the surface layer, and more extensive surface roughening.

The radiation pulse duration, i.e., the pulse width, should be in the range of 10 nanoseconds to 100 microseconds to assure rapid excitation of the affected surface layer. The efficiency of the process is increased by heating the polymer during irradiation. This temperature should be above room temperature and below $T_m$ for the polymer. For example, temperatures above 30° C, or, above 40° C are preferred.

The net effects of pulse width, coefficient of extinction, and radiation intensity are to produce a particular type of mechanistic events. First, and to a minor degree, there is a photolytic effect in which absorbed radiation energy causes random bond scission to occur in the semicrystalline polymer. This effect is desirably minimized in the practice of the present invention to minimize the damage to polymer properties caused by this effect. Indeed, operation of the present invention under ideal conditions has been found to cause some decrease in the oxygen-to-carbon ratio, but sensitive ellipsometric and infrared measurements have been unable to detect any significant loss of material from the surface as a result of proper radiation conditions. However, the surface layer can undergo a controlled degree of degradation as reflected in less than about a 50% decrease in the number average molecular weight.

The second effect is a result of the unusual nature of the thermal excitation of the surface layer in the optical path of the radiation. Much of the absorbed light energy is translated into heat, with the heating cycle corresponding to the pulse width of the radiation. It is certain that instantaneous temperatures that exceed the normal melting point of the polymer (e.g., for poly(ethylene terephthalate) that is about 260° C) are reached throughout most of the affected area, although an unusual thermal gradient may be produced within that volume because of the rapid attenuation of the incident energy due to light extinction by the polymer composition. The heat cycle thus corresponds to the pulse width, in a range of from about 10 nanoseconds to 100 microseconds. After the heating cycle, the next phenomic concern is the ensuing cooling cycle. Because of the thin nature of the affected volume and its contact with ambient air at the surface and bulk material (which are usually at room temperature), it can be estimated that the surface probably cools down to the glass transition temperature (e.g., for poly(ethylene terephthalate) this is about 75° C) within microseconds. Once below this temperature, polymer chain conformations tend to be frozen. Considerations with respect to this unusually brief thermal cycle indicate that conformational changes available to the polymer chains remain highly restricted during the brief period while the affected surface area undergoes this excitation. Short segmental motions, e.g., of the 'crankshaft' rotational type, have extremely short relaxation times, and it is expected that they may readily occur within the time-temperature regime created in the practice of the process of the present invention. The confirmation that such motions do indeed occur is provided by the IRRAS spectroscopic studies that show that there is a significant trans-to-gauche-conformer transformation in the surface layer which results from the irradiation of semicrystalline film (e.g., biaxially oriented poly(ethylene terephthalate)) with, for example, an ArF excimer laser.

This type of conformational change requires the rotation of a short segment of the PET chain involving only several carbon atoms. Similar considerations indicate that it is highly unlikely that the pre-existing crystallites or crystal lattices in the affected surface layer undergo any major spatial rearrangements because this time-temperature regime precludes the type of long range translational and large chain segment rotational motions which would materially change the pre-existing packing arrangement within the crystal lattice. Thus, it strongly appears that the pulsed UV irradiation of PET (and probably all semicrystalline polymers having appropriate extinction coefficients) provides films having surface layers with a unique morphology (i.e., quasi-amorphous) in which the polymer chains are highly disordered over short segment lengths, but substantially retain the long-range order that existed between chains and over long segment lengths of those chains prior to excitation. Indeed, the excimer laser treatment of a thin film of thermally crystallized PET indicated that the original spherulitic structure remained intact, tending to affirm this description.

The substantial trans-to-gauche-conformer transformation which is caused by the excimer laser radiation is a clear indication of short range chain conformation disordering, suggesting that although the crystallites may have undergone short range disordering, the longer range 3-dimensional packing order probably remains virtually intact. It is for this reason that the surface is referred to as being in a quasi-amorphous state since it has physical characteristics embodying some crystalline properties, and yet displays predominantly amorphous properties.

The volume or areas of polymer affected or converted (i.e., the affected surface layer) by the process of the present invention are defined as being in a 'quasi-amorphous' state because the highly ordered registry

of identical chemical moieties in adjacent folds of the chain-folded crystal lattice is largely destroyed, but the overall 3-dimensional architecture of the crystal lattice is preserved. Thus, the chemical disordering which occurs as a result of the radiation is characteristic of an amorphous state, while the retention of longer range geometric order resembles a pseudo-crystalline state. The layers or regions are neither totally amorphous nor totally crystalline in the classic sense of those words. In this specification where quasi-amorphous layers or regions produced in the practice of the present invention are discussed, those regions may be referred to as quasi-amorphous layers or regions because their chemical properties tend to resemble amorphous composition rather then crystalline compositions. However, amorphous and quasi-amorphous are distinctly different as noted and described in the description of quasi-amorphous materials given above.

Quasi-amorphous is a state which is between semicrystalline and amorphous. It is more difficult to distinguish from a true amorphous state than a semicrystalline state, but a clear distinction can be drawn.

The quasi-amorphous layer must, of course, be formed from a semicrystalline state. The semicrystalline state may be a uniaxially oriented film, biaxially oriented film, or contain grossly unoriented crystallites (e.g., spherulitic crystallites randomly distributed throughout the film). When such a semicrystalline film is converted by the process of this invention (in whole or in part, as on one surface only) to the quasi-amorphous form, the quasi-amorphous areas will appear to be amorphous except that they will retain a latent memory for the crystalline orientation. This is a definitive distinction from the true amorphous state.

For example, oriented film will display anisotropy with respect to the absorption of infrared radiation (e.g., between 5,000 and 16,000 nm) in various directions in the film. Biaxially oriented film would most significantly display this anisotropy between the unoriented thickness dimension (e.g., the Z-axis) and the oriented length and width dimensions (e.g., the X- and Y-axes) of the film. When such an oriented film is quasi-amorphized according to the present invention to a state most closely resembling a true amorphous film (e.g., the entire thickness or a larger thickness is repeatedly treated without ablation of the film is quasi-amorphous), the film or layer will appear to be amorphous. However, the film or layer will not be truly amorphous because it will retain a latent memory for the crystallite orientation, in this case being evidenced by a latent memory for the anisotropic orientation of the original semicrystalline polymer.

When this quasi-amorphous layer or film is heated to promote recrystallization, the film or layer will begin to regain its original crystallite distribution or in the case of oriented film, regain at least part of its anisotropic orientation. When a truly amorphous layer is reheated, it will not develop anisotropy. Where the semicrystalline polymer film originally contained grossly unoriented crystallites, reheating of the quasi-amorphous layer or film would return such a crystallite orientation to the layer or film.

The process appears to work by the semicrystalline polymer's absorbing the energy of the irradiation within a limited depth of the irradiated surface. The energy is of sufficient intensity and duration to melt polymer, but of insufficient intensity and duration to evaporate, significantly chemically modify, or ablate polymer. When the irradiation stops, the melted polymer rapidly cools without crystallization. No special cooling of the melted layer usually needs to be performed as the melted layer is usually sufficiently thin that ambient air and adjacent bulk polymer temperatures will cool it. Forced cooling can be used on thicker layers if desired or can be used on thin layers to insure rapid cooling.

The semicrystalline polymer should be able to absorb the irradiation used in the process. The more highly absorptive the polymer is of the radiation, the greater the concentration of the process to the surface of the polymer. In general, the polymer should be able to absorb sufficient energy to cause thermal softening or melting of the surface and yet not absorb radiation at such a high level as would cause ablation, excessive degradation, or volatilization of the polymer. For example, a polymer may absorb at least 5% of incident radiation in a 1 $\mu$m (micron) thick film when the radiation is applied at a rate of 1 Joule/cm$^2$. Absorption of the radiation may be enhanced by the addition of radiation absorbing dyes and pigments to the polymer. These, and other, radiation absorbing materials can have some noticeable effect at levels as low as 0.05% by weight, but can also be used at higher levels, even up to 90% by weight and higher. For example, a polymer used to modify a pigment may be treated after it has been combined with the pigment. A generally preferred range would be from 0.1 to 50% by weight for such radiation absorbing additives.

The quasi-amorphous surface layer on the semicrystalline polymer base is unique because 1) it exists without substantial change of the surface chemical structure while the bulk properties of the polymer are unchanged 2) it has a lower softening temperature than the semicrystalline polymer, which lower softening temperature allows auto adhesion at a temperature below that at which the bulk film would autoadhere, 3) it is more easily swelled by organic solvents which allows a high degree of bond entanglement with itself and with other coatings and polymers, 4) the controlled depth of amorphization serves to limit the depth of solvent penetration and hence limits the effect of solvents on the bulk material below the quasi-amorphous

layer, and 5) it has a reduced optical index of refraction which is graded from the bulk to the surface.

The product of the present invention has characteristics and features which tend to be different from those of the products of prior art processes. For example, it has been noted that the depth of the quasi-amorphous areas is at least five (5) nanometers. This tends to be an inherent result of the process. The previously referenced work reported by Wu concerning truly amorphous surfaces generated by non-crystallizable fractions being forced to the surface producing very thin amorphous layers. The thickness of these layers is never more than 3 nm and is usually less than 2 nm. Additionally, the chemical make-up of the surface region is significantly different from that of the bulk polymer because of the concentration of non-crystallizable fractions at the surface. The surface produced by this prior art phenomenon would have a weight average molecular weight more than 50% different from the weight average molecular weight of the associated bulk semicrystalline polymer. The surface produced by the practice of the present invention should have a difference of less than 50% between the weight average molecular weight of the surface quasi-amorphous layer and the bulk semicrystalline polymer.

Another characteristic of the treated materials of the present invention which sometimes can be observed but is unique to those articles of the present invention is the similarity between the long-range molecular orientation of the surface quasi-amorphous layer and the semicrystalline polymer in bulk. Polymer orientation relates to the degree to which polymer chains are statistically or more predominantly oriented within the polymer. Ordinarily, when semicrystalline polymers are melted, the orientation in the crystalline and amorphous phases is randomized and is significantly different from the orientation in the semicrystalline polymer. Observations of the amorphized surfaces in the practice of the present invention indicate that the orientation within the quasi-amorphous layer remains similar to that of the semicrystalline polymer. Microscopic examination under cross-polarizers shows that the orientation of the quasi-amorphous layer is similar to or indistinguishable by visual observation from the orientation of the semicrystalline polymer. The physical properties of the quasi-amorphous layer, such as its index of refraction, infrared absorption spectrum and solubility clearly show that the layer is in fact in a partially amorphous state.

Corona discharge treatment of polymer surfaces does not necessarily render surfaces amorphous, but oxidizes the surface of the polymer. Corona treatment tends to have its most significant oxidative effect to a depth of about 2 nm. The corona treatment creates or adds functional groups to the polymer as a result of reactions with the environment in which the discharging is performed. For example, functional groups such as carboxylic groups, phenol groups, hydroxyl groups, carboxyl groups, and amide groups can be added to the polymer by the corona treatment. These groups would not be a direct product of the process of the present invention. Corona treatment of the amorphous surfaces of the present invention would generate such functional groups and would not necessarily crystallize the surface. Corona treatment also changes the optical density of the surface layer because of the formation of these new chemical materials in that surface. As compared to the bulk polymer, the optical density of the surface layer may increase by 0.2 within a 50 nm region of the visible portion of the electromagnetic spectrum (particularly in the yellow region).

Both corona discharge and flame treatment significantly modify the chemical composition of the polymer in the surface regions treated. Corona discharge tends to degrade or crosslink the polymer, creating a lower or higher crosslink density in the surface than in the bulk polymer. The article of the present invention, unless further treated as by corona discharge, will have approximately the same crosslink density in the amorphous surface layer as in the bulk polymer region. This change in crosslink density can be observed in the surface layer by a reduced tendency or ability to recrystallize. Plasma, and ion implanation treatments have effects on the crosslink density similar to those generated by corona discharge.

Flame treatment of polymeric surfaces (such as that reported in U.S. Patent 4,568,632) is a much more destructive and chemical composition altering process than the process of the present invention. The patent describes the ablation of materials from the surface during treatment. This is probably the combined result of evaporation, oxidation, polymer chain breakage, and other destructive processes. This process would cause the formation of the functional groups described above and probably cause a significant overall change in the molecular weight and chemical make-up of the polymer on the surface, probably to a depth of about 2 nm. The flame treatment as presently practiced also causes a change in the optical density of the polymer on the surface due to the change in the chemical composition of that surface layer. That change in optical density is at least about 0.2. In the practice of the present invention, the quasi-amorphous layer produced on the surface has an optical density which is within 0.1, preferably within 0.08, more preferably within 0.05 and most preferably within 0.03 units of the bulk polymer. Additional treatment (e.g., corona discharge or coloration with dyes or pigments) could, of course, be used to change that value. But in the absence of dyes or pigments differentially distributed between the quasi-amorphous layer and the bulk

layer, there should be little or no difference in optical densities.

In the preferred fluence range of the present invention, the most notable result is the formation of a new morphological state of the polymer within the surface layer (i.e., a quasi-amorphous, deoriented or oriented glass) which resides in the optical path of the radiation and begins at the surface of the polymer. This morphological transition is attended by some extremely mild degradation, as attested by the diminution of the O/C ratio (XPS analysis and solvent extraction data). The failure to detect weight loss by infrared and ellipsometric measurements indicates that gas evolution is, at most, a minor event. Similarly, IRRAS spectra shows evidence of only a morphological rather than any chemical change. The change in the O/C ratio is quite different from that occurring with flame treatment or corona discharge where the atom/atom, oxygen/carbon ratio increases. This increase may be very small, but in most thorough treatments there is a change in the ratio of about 0.1 or 0.2. The O/C ratio may actually decrease in the quasi-amorphous layer of the present invention as compared to the bulk polymer.

The remarkable aspects of the surface layer produced in this invention are: 1) its unchanged texture; 2) its unchanged optical absorption or scattering characteristics, and 3) its still appreciable molecular weight. Each of these aspects can be very important. For example, film roughness is very injurious in substrates for magnetic media because that roughness can be the limiting factor in the ultimate density of recorded information that can be achieved. Film yellowing or scattering (i.e., haze) on the other hand cannot be tolerated where the film is used as a substrate in the manufacture of imaging products, e.g., X-ray film. Finally, the absence of a major fraction of low molecular weight oligomeric products in the surface quasi-amorphous layer avoids the situation where subsequently applied functional coatings fail in use due to inherently poor adhesion or solvent resistance which stems from the weak boundary layer present at the coating/film interface.

The quasi-amorphous surface of the polymer also reduces the reflectivity of that surface. Normal, smooth uncoated polymer films will have a reflectivity of 10% or more. Highly texturized polymer surfaces can reduce this reflectivity, but cannot present a smooth surface, that is a surface having no texture which is easily visible with a scanning electron microscope at 10,000x magnification. The polymer films of the present invention can provide such smooth surfaces with reflectivities of 9% or less to 550 nm light at 80-90° incident angles. This is clearly shown in the Examples.

The process of the present invention also tends to not modify the surface of the polymer in a topographic morphologic sense. The physical surface structure, before and after amorphizing, tends to be the same in the practice of the present invention. Surfaces with a high degree of surface roughness may be somewhat softened in their features, but will still tend to have rough surfaces. Smooth surfaces will be substantially unchanged with respect to the absence of features on their surface. Flame treatment would tend to greatly modify the surface features of the surface so treated.

The process of producing this invention is an advance over prior methods of surface modification such as sputter etch, plasma, corona, chemical, flame and solvents because no vacuum is required, no contact with the surface is required, no chemistry is added to the treated polymer so that it is more likely to be recyclable, and there are no known environmental problems.

The surface properties of polymer films are of considerable importance to industry. These properties include adhesion, coefficient of friction, optical properties, wettability, and barrier properties. Modification of polymer surfaces to obtain these desired properties already can be realized by a number of different techniques. Many of these prior art processes can have adverse effects on the product, however. The more traditional "wet chemical" modification techniques, such as treatment with acids, amines, caustic, phenols or non-reactive liquids (i.e., solvents), have been successfully used to enhance the "wettability" and "bondability" of films and fibers. These chemical treatments can cause a temporary swelling of the polymer surface which results in a more reactive surface. On chemical evaporation this swelling subsides. These physical results from such treatments can also result in a chemical modification of the surface by adding new substances, breaking the surface down to new substances, which also results in lower molecular weight polymer chains on the surface, or by cross-linking molecules on the surface.

The films of the invention may also be used to improve the use of polymeric films in various areas such as heat sealing, barrier layers, carrier layers, improved surface adhesion, control of friction properties, and optical clarity.

One problem that has often occurred in the handling, manipulating or processing of polymeric material is the relatively large coefficient of friction that exists between film surfaces. Biaxially oriented poly-(ethyleneterephthalate) is a film material that is used extensively in commerce and manufacturing and is well recognized as presenting a problem with respect to an excessive coefficient of friction between adjacent sheets or plies. In many uses, such as in the handling and processing of imageable materials with poly(ethylene terephthalate) (PET) substrates, it is not desirable to use lubricants (either dry or wet)

between the films. The drag between adjacent films can cause problems of multiple feeding of sheets, partial feeding of sheets, and skewing of sheets during automatic or even manual processing.

The problem is most readily manifest in the winding of PET film which contains neither so-called internal slip agents nor lubricating additives. The self-adhesion of adjacent plies is such that great force is required to separate those plies in an unwinding operation, and that force is frequently sufficient, particularly in the case of thin gauge films, to cause an unacceptable number of film breaks. Moreover, it has been established that to avoid troublesome film handling and processing the static and sliding coefficients of friction would be desirably less than 0.8, preferably less than 0.6.

One standard solution to this problem of the coefficient of friction is to incorporate particles in the film, using so-called internal slip agents. The presence of these particles (usually in the range of 0.1 to 3% by weight of the polymer), roughens the film surface and reduces the static coefficient of friction into the range of about 0.3 to 0.5. Although this technique has been used for many years, there are significant drawbacks to this practice. Not only are film costs increased by this procedure, but reduced film transparency which results from light scattering effects, and the increased roughness caused by multiple protrusions of the particulates in the surface of the film are frequently detrimental.

A semicrystalline polymeric material is treated, as by disclosed methods, to generate a layer of amorphous, quasi-amorphous, or ablated polymer on a surface of that material. The treated surface is then exposed to a material which is able to either 1) lower the Tg of the surface polymer layer so that crystallization occurs within that layer, or 2) dissolve the quasi-amorphous surface to expose underlying semicrystalline polymer. By controlling the size (thickness) of the irradiation generated layer, crystallite growth, when it occurs, is controlled so that the optically undesirable effects of large spherulites are not generated. The crystalline state on that surface layer also reduces the static and kinetic coefficient friction of that surface as compared to a normal surface of that polymer.

The surfaces useful in the practice of the present invention all include quasi-amorphous regions. In a preferred embodiment this region begins at the surface and comprises the entire top surface or region (if discontinuous). In other useful embodiments the quasi-amorphous region may lie immediately below or be part of a highly textured or chemically modified structure as would be produced according to the ablative procedure disclosed in U.S. Patent No. 4,417,948, "Modification of Polymer Surfaces by Far-ultraviolet Radiation of Low and High (Laser) Intensities", R. Srinivasan and S. Lazare, Polymer, 1985, Vol. 26, Aug pp. 1297-1300; and "Ablative Photodecomposition", R. Srinivasan and W. J. Leigh, J. Am. Chem Soc., 1982, 104, 6784-6785. The useful surfaces according to these references can widely vary in their surface characteristics. These surfaces will contain zones or regions of quasi-amorphous polymer under polymeric decomposition debris and/or ablated surface areas. All products of this ablation technique will have significant, measurable amounts of polymer decomposition debris on the surface, in concentrations greater than present in the bulk polymer. This debris may be in the form of carboxyl groups, hydroxyl groups, lower molecular weight polymers or components. The polymers subjected to a rigorous ablative process as preferred by these references will have a surface with significant microstructuring thereon having average polymer molecular weights the same or less than that of the polymer in the bulk regions, and the surface exhibiting a lower oxygen/carbon ratio than the bulk material. The periodicity between peaks typically averages between 300 and 4000 nm and the average height (from valley to peak) of the microtexturing features is usually between 200 and 4000 nm. These materials, as well as the preferred structures being substantially free of polymer decomposition debris having quasi-amorphous areas which begin at the surface, are included within the description of a layer having a quasi-amorphous area of at least 5 nm in depth.

The residual debris denoted above would be organic material having a lower oxygen/carbon ration than the bulk polymer. Even if not visually observable in the amounts present, the debris itself would be yellower in color than the bulk material and would be more highly conjugated. The debris also tends to leave microscopically observable (at least 10,000, and even at 20,000X) artifacts on the surface recognizable as debris and not merely texturing. With respect to polyethylene terephthalate, ablation produces a surface substantially soluble in acetone, while the preferred quasi-amorphous surface layer is not soluble in acetone.

The essence of the preferred crystallization process is to first provide a thin film of a semicrystalline polymer having at least one surface layer comprising an amorphous, quasi-amorphous, or ablated layer of the polymer. The surface containing amorphous polymer is then exposed to a material (e.g., penetrant, solvent, swelling agent, etc.) which lowers the Tg of the quasi-amorphous or amorphous polymer containing layer to less than the ambient temperature (bulk temperature) of the polymeric material. As the Tg- lowering material removes itself (evaporation) or is removed (leaching) from the surface layer, crystallization of the polymer occurs in the layer. The size of the crystallites in this layer is controlled by keeping the initial layer

thickness to less than 1,000 nm. The texture and morphology of the crystalline surface, which is formed during this process cause a reduction in the coefficient of friction at the surface of the polymer. By restricting the size of surface features to a range of less than 500 nm, and particularly to less than 400 nm, optical effects such as light scattering, haze, and blurring are also reduced or eliminated. In normal circumstances, solvent induced crystallization in an amorphous polymer causes the growth of spherulites of dimensions sufficient to scatter visible light. This is not the case in the present invention. Also, when crystallization occurs in the process of the present invention it is not accompanied by visually observable (i.e., 100X) changes in the surface texture.

The essence of the dissolution process is to remove, some or all of the quasi-amorphous material to expose underlying semicrystalline polymer.

The polymeric article produced by penetrant treatment comprises a semicrystalline polymer having on at least one surface thereof areas having thicknesses of at least 5 nm and less than 500 nm of the same polymer in a crystalline distribution different from that of the bulk polymer, providing a kinetic coefficient of friction less than 0.8

The use of a polymeric film having only a limited depth of amorphous, quasi-amorphous or ablated polymer is critical to the retention of optical clarity in the film. If a completely amorphous crystallizable polymeric material were subject to the process of the present invention, large spherulites would form, clouding the surface of the film.

There are other benefits to the use of the unique quasi-amorphous materials and processes of the present invention as compared to other known treatments for reducing surface roughness. Besides maintaining the clarity of the film, the process can be used on fully oriented films, and the treatment does not cause lower molecular weight materials to move to the surface, altering the properties of the bulk polymer and the surface.

The kinetic and static coefficients of friction provided to the surface can be less than 0.8, preferably less than 0.7, more preferably less than 0.6 and usually in the range of 0.40 to 0.6 or even less.

Two major applications for which PET films are widely used are as substrates for photographic or imageable films and magnetic recording media. In the case of imageable films, it is often necessary to avoid completely the use of internal slip agents because they impart excessive haze to the film. In this instance, it is common practice to knurl a pattern which imparts a thick edge to the film which serves to separate the plies of film during winding and unwinding operations. The inclusion of air spaces facilitates the handling of such films. However, this knurling procedure is limited in use to relatively thick films, i.e., films having a final gauge in excess of about 50 micrometers.

In the case of thin films, e.g., magnetic video tapes which typically vary in thickness between 8-20 micrometers, there readily has been no suitable alternative to the use of internal slip agents. In this instance the surface roughness that these slip particles impart to the film is objectionable because it becomes a limiting factor in the density of recorded information which may be stored per unit area of film. Moreover, the use of slip agents is objectionable because of the increased cost of film manufacture that their use entails and the shortened life of filters used to remove agglomerates from the PET melt prior to extrusion.

The present invention provides a novel form of a PET film which is unique in at least two respects. It can be provided in a biaxially oriented form in which the film is virtually haze-free, has unusually smooth surfaces and yet has a sufficiently low coefficient of friction to enable facile processing during its manufacture and subsequent use. It also has remarkably adherable characteristics in that useful functional coatings, such as pressure-sensitive adhesive coatings, magnetic coatings, imageable coatings, etc., may be directly applied thereto with outstanding adhesion being manifest without resort to any of the intervening adhesion-promoting chemical or physical treatments which are normally required.

The PET films of the present invention are made in a two-step process. First, the biaxially oriented PET, which preferably has been extensively crystallized during normal orientation and heat setting steps is subjected to pulsed UV radiation under conditions which effectively "amorphize" a thin surface layer of the film.

The second step involves the treatment of the amorphized surface layer with either a liquid or gaseous penetrant which is known to be effective in inducing the transformation of amorphous PET to a semicrystalline state. The nature of the morphological transformations which the PET film surface layer undergoes in each of these steps is more fully discussed later.

The second step of the inventive process entails the exposure of the affected surface layer to a penetrant which transforms normally amorphous areas of the polymer into semicrystalline polymer. This transformation is triggered by the swelling of the polymer by the penetrant to reduce its Tg below room temperature, thus allowing the chains sufficient mobility to crystallize. Many solvents and penetrants are known in the prior art which induce crystallization at 25°C of normally amorphous poly(ethylene terephthalate). The mechanism for this crystallization as well as an extensive listing of useful materials is described in Polymer Symposia 46, 291, Interscience, 1974 by A. B. Desai and G. L. Wilkes.

It is known that crystallizable polymers, when amorphous, respond to thermal annealing above Tg to crystallize. Transmission electron micrographs at 32,000 magnification of replicated surfaces show that the texture of the essentially featureless surface of laser treated PET is converted to a texture suggesting a lamellar crystalline nature when annealed for 30 minutes at 210°C. IRRAS spectroscopy affirmed that crystallization had occurred because of the almost complete conversion of the short-range disordered gauche-conformer to the trans-state. (The thermally recrystallized film was found to be non-heat sealing.)

The effects of active penetrants on the amorphized surface layer have surprisingly been found to be quite disparate. Immersion of laser treated PET in either acetone, methylene chloride, or chloroform, followed by drying, effectively yields films having slippery surfaces, i.e., acceptably low coefficients of sliding friction. However, we have found that both methylene chloride and chloroform dissolve most, if not all, of the affected surface layers and replicated surfaces of these treated films show fairly nodular textures. Thus, these particular solvents essentially remove the affected surface layer and apparently reveal the largely unaffected underlying bulk polymer. Acetone treatment, on the other hand, was found to dissolve no measurable amount of material. Apparently, it simply caused the amorphized surface layer to recrystallize and micrographs of the thus-treated film at 32,000X showed a pronounced, fine, regularly reticulated texture.

The present invention also provides a unique amorphized surface layer or surface region on a semicrystalline polymer, formed by the irradiation of the polymer by radiation which is strongly absorbed by the polymer and of sufficient intensity and fluence to cause such amorphized layer. An adhesive material is bonded to said layer or to an organic polymer layer bonded to said amorphized layer as a plasticizer barrier layer, for example. The semicrystalline polymer surface has been altered into a new composition of matter by actinic radiation such as an intense short pulse UV excimer laser or short pulse duration, high intensity UV flashlamp. This surface exhibits improved ply adhesion to adhesives, either applied from solvent or by heat lamination, as compared to film surfaces treated by corona discharge or plasma priming.

The final product of the present invention may be made in a number of different ways. The adhesive may be directly coated onto the quasi-amorphous surface or coated onto a release layer and the quasi-amorphous surface laminated thereto. A second organic polymeric layer, preferably less penetrable to migratory components within the semicrystalline polymer layer (such as UV absorbers, plasticizers, antistatic agents, dyes, and the like) than the semicrystalline polymer, may be coated over said quasi-amorphous layer and the adhesive coated over that seond layer. Alternatively the adhesive may be coated onto a release layer or carrier sheet, the second organic polymer layer coated or laminated to the adhesive and the quasi-amorphous layer laminated to the second polymer layer.

Pressure-sensitive adhesives are art recognized as a standard class of materials. These are adhesives which in dry (substantially solvent free except for residual solvent) form are aggressively and permanently tacky at room temperature (e.g., 15 to 25°C) and firmly adhere to a variety of dissimilar surfaces upon mere contact without the need for more than manual pressure. They require no activation by water, solvent or heat in order to exert a strong adhesive holding force towards such materials as paper, cellophane, glass, wood and metals. They have a sufficiently cohesive holding and elastic nature so that, despite their aggressive tackiness, they can be handled with the fingers and removed from smooth surfaces without leaving a substantial residue (cf. Test Methods for Pressure-Sensitive Tapes, 6th Ed., Pressure Sensitive Tape Council, 1953). Pressure-sensitive adhesives and tapes are well known, and the wide range and balance of properties desired in such adhesives has been well analyzed (cf. U.S. Patent 4,374,883; and "Pressure-Sensitive Adhesives" in Treatise on Adhesion and Adhesives Vol. 2, "Materials", R.I. Patrick, Ed., Marcel Dekker, Inc., N.Y., 1969). The various materials and compositions useful as pressure-sensitive adhesives are available commercially and are thoroughly discussed in the literature (e.g., Houwink and Salomon, Adhesion and Adhesives, Elsevier Publ. Co., Amsterdam, Netherlands, 1967; Handbook of Pressure-Sensitive Adhesive Technology, Donates Satas, Ed., VanNostrand Reinhold Co., N.Y., 1982).

Pressure-sensitive adhesives are generally chemically composed of rubber-resin materials, acrylic resins, polyurethanes resins, silicone resins, and the like. Amongst the various patent literature describing compositions and improvements in pressure-sensitive adhesive formulations are U.S. Reissue Patent No. 24,906; U.S. 2,652,351; U.S. 3,740,366; U.S. 3,299,010; U.S. 3,770,708; U.S. 3,701,758; U.S. 3,922,464; U.S. 3,931,087; U.S. 4,012,560; U.S. 4,077,926; U.S. 4,387,172; U.S. 4,418,120 and U.S. 4,629,663. These classes of rubber resin, acrylic, silicone, and polyurethane pressure-sensitive adhesives as well as any other pressure-sensitive, thermally-activatable, solvent-activatable, or water-activatable adhesives are generally useful in the present invention.

The present invention provides a process for heat sealing at least one film having at least one

amorphized surface layer on a semicrystalline polymer. This surface is preferably formed by the irradiation of the polymer by radiation which is strongly absorbed by the polymer and of sufficient intensity and fluence to cause such amorphized layer. The semicrystalline polymer surface is thus altered into a new morphological state by radiation such as an intense short pulse UV excimer laser or short pulse duration, high intensity UV flashlamp.

The heat-sealing process of the present invention comprises 1) placing two surfaces in contact with one another, one of the surfaces comprising a semicrystalline polymer, the contacting surface of which has areas of the same polymer in a quasi-amorphous state, the areas having a depth of at least 5 nm, and 2) heating the areas of contact between said two surfaces sufficiently to cause bonding therebetween. The temperature used is, of course, dependent upon the polymers used, each polymer having different softening, melting, or fusing temperatures. Ther temperature may be as low as 100°C although minimum temperatures of 110°C or 120°C are more common. The limit on temperatures at the interface should be lower than those that would degrade the polymer (generally lower than 400°C) or disrupt the semicrystalline structure or orientation (generally lower than 300°C).

Pressure is of course desirable during the process to keep the surfaces intimately engaged during heat sealing. This may be accomplished by platens or rollers. Pressure on the order of at least 5 g/cm$^2$ is desirable with pressures of at least 10 g/cm$^2$ or 50 g/cm$^2$ being more preferred.

The quasi-amorphous surface of the polymer used in forming images has adhered thereto a material or composition having an optical density. By "optical density" it is meant that radiation within the wavelengths of 410 to 1000 nm, preferably between 410 and 780 nm, is absorbed by the material or composition in measurable amounts. As measured by a spectrophotometer, the optical density of the material applied to the surface should have a Dmax of at least 0.2, preferably at least 0.5, more preferably at least 0.8, and most preferably at least 1.0 or at least 2.0.

The materials or compositions having optical densities include, for example, dyes, pigments, paints, stains, varnishes, toners and inks. These may be applied by any of the varied techniques known. For example, dyes and pigments may be vapor deposited directly onto the surface or applied in binder compositions or solvents. Paints and inks may be applied by brush, gravure plates, planographic plates, spray, jet, electrostatic deposition, or the like.

The present invention also provides an amorphized surface layer or region on a plasticized semicrystalline polymer, comprising a poly(vinyl chloride) polymer (PVC), formed by the irradiation of the polymer by radiation which is strongly absorbed by the polymer composition and of sufficient intensity and fluence to cause such amorphized layer. This amorphizing may be accomplished by rendering the surface truly amorphous, by ablation techniques shown in U.S. Patent Nos. 4,568,632 and 4,417,948, or by the novel and unique process described herein. The semicrystalline polymer surface is thus altered into a new morphologic state by actinic radiation such as an intense short pulse UV excimer laser or short pulse duration, high intensity UV flashlamp. The amorphized surface of the article is coated with a material which forms a barrier such as a polyurethane or polyacrylate film.

The surfaces useful in the practice of the present invention all include quasi-amorphous regions. In a preferred embodiment this region begins at the surface and comprises the entire top surface or region (if discontinuous). In other useful embodiments the quasi-amorphous region may lie immediately below or be part of a highly textured or chemically modified structure as would be produced according to the ablative procedure disclosed in U.S. Patent No. 4,417,948, "Modification of Polymer Surfaces by Far-ultraviolet Radiation of Low and High (Laser) Intensities", R. Srinivasan and S. Lazare, Polymer, 1985, Vol. 26, Aug pp. 1297-1300; and "Ablative Photodecomposition", R. Srinivasan and W. J. Leigh, J. Am. Chem Soc., 1982, 104 6784-6785. The useful surfaces according to these references can widely vary in their surface characteristics. These surfaces will contain zones or regions of quasi-amorphous polymer under polymeric decomposition debris and/or ablated surface areas. All products of this ablation technique will have significant, measurable amounts of polymer decomposition debris on the surface, in concentrations greater than present in the bulk polymer. This debris may be in the form of carboxyl groups, hydroxyl groups, lower molecular weight polymers or components, and the like. The polymers subjected to a rigorous ablative process as preferred by these references will have a surface with significant microstructuring thereon having average polymer molecular weights the same or less than that of the polymer in the bulk regions, and the surface exhibiting a lower oxygen/carbon ratio than the bulk material. The periodicity between peaks typically averages between 300 and 4000 nm and the average height (from valley to peak) of the microtexturing features is usually between 200 and 4000 nm. These materials, as well as the preferred structures being substantially free of polymer decomposition debris having quasi-amorphous areas which begin at the surface, are included within the description of a layer having a quasi-amorphous area of at least 5 nm in depth.

The residual debris denoted above would be organic material having a lower oxygen/carbon ratio than the bulk polymer. Even if not visually observable in the amounts present, the debris itself would be yellower in color than the bulk material and would be more highly conjugated. The debris also tends to leave microscopically observable (at least 10,000X, preferably 20,000X) artifacts on the surface recognizable as debris and not merely texturing. With respect to polyethylene terephthalate, ablation produces a surface substantially soluble in acetone, while the preferred quasi-amorphous surface is not soluble in acetone.

Typical functional materials which are included within polymeric materials and which tend to migrate out of the bulk polymer include plasticizers, lubricants, coating aids, surfactants, antioxidants, radiation (e.g., ultraviolet) absorbers and stabilizers. These materials which have a tendency to migrate to the surface of a polymer within which they are carried are called "migratory" materials according to the present invention. Examples of some of these materials are listed below.

Amongst the better known plasticizers and softeners are tall fatty acids, phenolic reins, vegetable oils, dipropylene glycol dibenzoate, paraffinic oils, butyl oleate, butyl stearates, aromatic hydrocarbon oil, sulfur-reacted vegetable oil, napthenic oils, coumarone-indene resins, phthalate esters, polyesters, silicate blends, organic phosphates, wood rosins, epoxidized plant oils, pine tars, and trimellitates. Amongst the lubricants are paraffin waxes, stearates, silicones, polyalkylene glycols, and polytetrafluoroethylene. Well known chemical and heat stabilizers include zinc organic complexes, barium cadmium complexes, organo-tin compounds, phosphites, phenolic resins, brominated organics, lead phosphites, fatty esters, expoxidized vegetable oils, and phosphates. Antioxidants and inhibitors include highly functional hindered phenols, alkylated diphenylamines, alkylated-arylated bisphenolic phosphites, polymeric phenolic functionalized quinolines, microcrystalline wax, alkylated quinones, alkylated thiodiopropionates, phenolic amines, and hindered thiobisphenols. These are of course only examples of the many different types of migratory materials known in the art to be usefully included in polymeric compositions. Usually these materials are present as at least 0.5% by weight of the polymeric composition. Many are present in amounts of at least 1%, preferably at least 2% by weight and are used in concentrations of up to 20 or 25% by weight of the polymeric composition.

The amorphizing of the surface of the PVC film greatly improves its adhesion to polymeric materials. Almost all polymeric materials, except possibly polymers designed to have poor adhesion to other materials (e.g., polytetrafluoroethylene), adhere very strongly to the treated surface upon the application of heat and pressure. It has thus been shown that substantially any polymeric material, whether laminated as a film, extruded as a hot-melt adhesive, or coated out of solvent adheres more strongly to the treated PVC surface than to an untreated PVC surface. Any polymer which is less penetrable by the plasticizers in the PVC film than the PVC composition itself can thus be used to reduce plasticizer migration. A film is less penetrable by the plasticizer if an eight µm (micron) film of the material containing 20% by weight of the plasticizer loses 10% by weight less of the plasticizer in a sixteen hour period in the solutions and under the conditions described in Example 1 than a PVC film of equal dimensions. If the plasticizer cannot be carried in the polymer (e.g., it is insoluble or immiscible), lower penetrability can be determined by comparing a PVC coated layer (with low plasticizer levels) to a coating layer of the polymer. Both of these coating layers would be on a PVC film having at least 20% by weight of plasticizer therein. Any film which would allow less than 90% of the amount of plasticizer lost by a PVC cover film to be lost would be a less penetrable polymer.

The coating polymers of choice would be poly(acrylic) and polyurethane polymers. Any polymer containing at least twenty-five molar percent of units derived from moieties having units of the formula

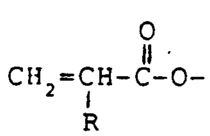

wherein R is H or $CH_3$ is an acrylic material. This term is clearly inclusive of acrylic and methacrylic polymers and copolymers. Exemplary acryloyl and methacryloyl monomers would be acrylic acid, methacrylic acid, acrylic anhydride, ethylacrylate, n-butyl acrylate, n-butyl methacrylate, isooctyl acrylate, dodecyl methacrylate, and multifunctional acrylates such as ethylene glycol dimethacrylate, propylene glycol dimethacrylate, butylene glycol dimethacrylate, neopentyl glycol dimethacrylate, hexylene glycol dimethacrylate, diethylene glycol dimethacrylate, triethylene glycol dimethacrylate, tetraethylene glycol dimethacrylate, polyethylene glycol dimethacrylate, trimethylol ethane trimethacrylate, tetramethylol methane trimethacrylate, tetramethylol methane tetraacrylate, trimethylol propane monococonut oilate

dimethacrylate, 2,2′bis(4-methacryloxy diethoxyphenyl) propane, ethylene glycol diacrylate, butylene glycol diacrylate, neopentyl glycol diacrylate, propylene glycol diacrylate, hexylene glycol diacrylate, diethylene glycol diacrylate, triethylene glycol diacrylate, tetraethylene glycol diacrylate, polyethylene glycol diacrylate, polypropylene glycol diacrylate, 2,2′bis(4-acryloxy propyloxyphenyl)propane, 2,2′bis(4-acryloxy diethoxyphenyl)propane, trimethylol propane triacrylate, trimethylol ethane triacrylate, tetramethylol methane triacrylate, and tetramethylol methane tetracrylate. These acrylic materials and particularly the acrylate esters may be copolymerized with all those comonomers known to be polymerizable with acrylic groups such as phenols, glycols and polyglycols.

The coatings on the substrates sometimes exhibit actual grafts between the two polymeric materials. That is, chemical bonds can actually occur on a significant level between the coating and the amorphous layer. This is particularly true where a polymerizable composition is polymerized or cured on the surface of the amorphous layer to form the antimigratory coating.

Polyurethanes are materials formed as the reaction product between organic polyisocyanates and organic polyhydroxyl compounds. These materials are well known in the art. A good description of polyurethanes and their chemical formation may be found in U.S. Patent No. 3,808,162.

The polymer surfaces treated with barrier layers in accordance with this aspect of the practice of the present invention may advantageously be further coated with an adhesive, particularly a pressure-sensitive adhesive. The adhesive would of course be best used on a film or sheet treated according to the present invention. The adhesive may be applied to the back side of the film or sheet to provide a tape with the barrier surface exposed. It is most preferred, however, to apply the adhesive to the barrier layer. This reduces migration of components between the film or sheet and the adhesive. This is particularly important in pressure-sensitive adhesive tapes since the migration of plasticizers and the like from the film or sheet into the adhesive can significantly alter the physical properties of the adhesive. Such variations in properties, either increasing or decreasing adhesion, modifying the coherence of the adhesive or changing the adherence of the adhesive to the base, is undesirable.

Pressure-sensitive adhesives are art recognized as a standard class of materials and are defined above.

With the increasing concern over environmental and safety issues, industry has looked toward a number of non-chemical surface modification techniques. Alternative techniques such as treatment with corona, plasma, sputter etch, E-beam, heat, UV, and lasers have been used to modify polymer surface properties. All of these treatments affect polymer surfaces in a fairly gross manner. With the exception of E-beam and heat, each treatment tends to result in a roughened surface caused by removing material, and they all eventually result in chemical modifications to the surface which are much like the changes from wet chemical treatments. None of these treatments affects the crystallinity of the polymer significantly without creating new surface chemistry. Table 1 is a summary of how various treatments affect polymer surfaces.

Table 1

| TREATMENT OF POLYMER SURFACES | | | |
|---|---|---|---|
| Treatment | Surface Texture | Surface Effect | Purpose of Treatment |
| Corona | Rough to Smooth | Remove Material<br>Add Material<br>Bond Scission | Priming<br>Enhance Wettability<br>Improve Adhesion |
| Plasma 10-200 nm | Rough to Smooth (100-2000Å) | Remove Material<br>Add Material<br>Crosslinking | Priming<br>Enhance Wettability<br>Improve Adhesion |
| Sputter-Etch | Rough | Ablation | Enhance Wettability |
| 10-200 nm | (100-2000Å) | Change Chemistry | Improve Adhesion<br>Reduce Coefficient of Friction<br>Reduce Optical Reflectance |
| High Intensity F-Beam | No change | Chain Scission<br>Cross Linking<br>Bulk Treatment Thick Layer High Energy | Curing Surface Coats<br>Grafting<br>Coating Adhesion |
| Heat | No change | Chain Scission | Enhance Printability |
| (Flame) | | Change Chemistry<br>Oxidation<br>Thick Layer | Form Barrier Layer |
| High | Rough to | Ablation | Priming |
| Intensity UV | Smooth | Change Chemistry | Enhance Wettability<br>Improve Adhesion<br>Etching |
| Laser (prior | Rough to | Ablation | Etching |
| art) | Smooth | Change Chemistry | Priming<br>Enhance Wettability<br>Improve Adhesion |
| Laser | No change | Amorphize Thin Layer | Reduce Optical Reflectance |
| (Present Invention) | | Photolyze | Increase Optical Transmission<br>Improve Adhesion<br>Improve Auto-Adhesion<br>Reduce Coefficent of Friction<br>Enhance e-Beam Grafting<br>Barrier Layer<br>Inc. Solubility of Crystalline Mtl.<br>Grafting |

Polymers generally can be either semicrystalline or amorphous. These categories are descriptions of the degree of ordering of the polymer molecules. Amorphous polymers consist of randomly ordered tangled chains. That is, amorphous polymers are highly disordered and intertwined with other molecules. Semicrystalline polymers consist of a mixture of amorphous regions and crystalline regions. The crystalline regions are more ordered and segments of the chains actually pack in crystalline lattices. Some crystalline regions may be more ordered than others. If crystalline regions are heated above the melting temperature of the polymer, the molecules become less ordered or more random. If cooled rapidly, this less ordered feature is "frozen" in place and the resulting polymer is said to be amorphous. If cooled slowly, these molecules can repack to form crystalline regions and the polymer is said to be semicrystalline. Some polymers are always amorphous. Some polymers can be made semicrystalline by heat treatments, stretching or orienting and by solvent inducement, and the degree of true crystallinity can be controlled by

these processes.

One aspect of the uniqueness of the present invention is the reversal of the above crystallization process to transform a thin surface layer of semicrystalline polymer into a quasi-amorphous thin surface layer residing on non-affected bulk semicrystalline polymer.

There are two necessary conditions required of the radiation source to provide the treatment of the present invention. Both high intensity (high power per unit area) and high influence (high energy density per pulse) are required of the radiation source. These requirements assure that a substantial amount of heat generated in the very thin surface of treatment stays in the surface. The effect of the radiation is to concentrate energy into the surface layer. Thermal diffusion into the bulk reduces this concentration of energy and makes the process less efficient. It is, therefore, desirable that only a small amount of heat be dissipated into the bulk of the polymer during irradiation. The more heat that is transfered to the bulk during the surface irradiation, the less efficient the process becomes until so much heat goes to the bulk that the process no longer works. Because of this requirement to rapidly heat only the surface layer and not the bulk of the polymer, conventional high intensity UV sources such as mercury arc lamps and common Xenon flash lamps with their inherently long pulse widths result in rapid diffusion of the thermal energy into the bulk polymer. This prevents a high concentration of energy being achieved at the surface.

The UV excimer laser is capable of producing high intensity, high fluence radiation on the surface of the polymer to be treated. The polymer used with a UV excimer laser must be semicrystalline and UV absorbing at the UV laser wavelengths. The result of the laser pulse interacting with the surface is a combination of photolyzation and heating. In other words, the short intense pulse significantly heats the surface of the polymer, but not the bulk, above the polymer melting temperature, and some minor surface molecule chain scission occurs. During the brief time the surface region is heated above its melting temperature, the molecules can randomize themselves into a disordered condition and broken bonds reconnect, although not necessarily to the same end from which they were broken or to the same degree. The temporarily broken molecular bonds will assist this melting process. After irradiation the surface layer will rapidly cool, and "freeze" the new short-range order disordered long-range order ordered layer into an amorphous structure. That is, the cooling rate is fast enough so the surface layer cannot recrystallize. The irradiation thus produces a quasi-amorphous layer on the bulk polymer which layer undergoes only a small change in molecular weight because of the recombination of bond scissions and no chemcial changes such as the addition of ions. The surface texture undergoes no significant change because no material has been removed or ablated and both melting and cooling occur over a short period of time.

The laser treated surface can be shown to be quasi-amorphous by a number of tests: 1) it washes off with solvents that only the true amorphous form of the polymer is soluble in, 2) infrared reflection absorption spectroscopy (IRRAS) of the surface indicates the same pattern in the surface layer as is normally exhibited by the true amorphous form of the polymer, and 3) thin film ellipsometry of the surface gives the same refractive index as does the true amorphous form of the polymer.

XPS measurements of the treated surface indicates no significant chemical changes by addition. It also shows that a small O/C ratio change has occurred which indicates some small amount of surface decarboxylation. Gel permeation chromotography (GPC) chloroform-extracted PET film shows only a small molecular weight decrease as compared to the untreated polymer. Water contact angle measurements show no change in the treated surface which means the surface has not been roughened significantly and that functionality groups have not been added. As viewed at 32,000X magnification, slight texturing on an extremely fine scale is observed, with no features greater than 70 nm (700 Angstroms) in height, and most (more than 50%) of all features having a height of less than 30 nm (300 Angstroms). Shadow mask Transmission Electron Microscopy (TEM) indicates peaks and valleys on the surface of some samples (depending on their original topography) of about 30 nm (300 Å) In still other cases, similar treated PET film displays completely smooth, essentially featureless surfaces.

Early investigations of laser treatments of polymers were concerned with etching or ablation of the polymer and thus used laser intensities and fluences much higher than required for the present invention. These investigators found a fluence threshold for ablation which of course was different for each polymer treated. Below this threshold no ablation would take place. Investigation was never made to determine what actually was occuring at lower fluences. It has been found that like the fluence threshold for ablation, there is likewise a fluence threshold for the amorphization of this invention and it too varies with the polymer being treated.

Because of its great commercial interest, the treatment of PET has been studied most extensively during the progress of the present invention. However, other polymers have also been studied. The following semicrystalline, UV absorbing polymers or copolymers thereof specifically have been treated: polyesters (e.g., PET), nylon, coating mixtures of poly(vinylidene chloride) on PET and poly(vinyl chloride)

with UV absorbing plasticizer added. Polypropylene, polyethylene (e.g., polyolefins), polyvinyl chloride, polytetrafluoroethylene and polyvinylidene chloride, although semicrystalline, are not UV absorbing at wavelengths greater than 190 nm, and therefore, require one of the following: the addition of UV absorbing compounds, shorter wavelength lasers, or an energy source different than UV laser. E-beam, x-rays, ion beams, and plasmas, if applied in sufficient intensity and fluence can work on these polymers.

Polymethylmethacrylate and epoxies are normally amorphous and so treatment is unnecessary and does not effect a differentiation between the surface and bulk polymer.

The UV radiation source preferably can be by excimer laser or flashlamps at wavelengths less than 320nm. The pulse widths should be less than 100 microseconds. Typical pulse widths are 7.5 microseconds for flash lamps and 10-80 nanoseconds for an excimer laser.

The polymers having the quasi-amorphous surface produced according to the present invention can be used in product areas where those polymers have previously been used. For example, polyester supports for imaging media and adhesives, will display improved bonding to the media or adhesive. Heat sealable films of semicrystalline materials can display improved heat-sealability when treated according to the practice of the present invention. The ability of semicrystalline polymers to bond to other materials generally tends to be universally enhanced by the presence of the quasi-amorphous layer and so the present invention can be used in all known environments when bonding to a semicrystalline polymer is desired.

## EXAMPLES

In the following examples all treatments were done using either a Model 2460 laser by Questek, Billerica, MA or a Model 102E laser by Lambda Physik of Acton, MA. These lasers give equivalent outputs for the purposes of treating polymer films. The lasers were operated with either Ar plus Fluorine gas at an emission wavelength of 193nm or with Krypton plus Fluorine gas at an emission wavelength of 248nm and with a system of cylinderical lenses to control the exposed area of the sample and thus the energy density of the beam striking the sample. Each system was calibrated using a Model ED500 power meter by Gentech, Ste-Fog, Qc, Canada. Pulse width was approximately 15 nanoseconds for both lasers.

### Example 1

This example describes the treatment of a surface of 0.1 mm (4 mil) thick biaxially oriented polyethyleneterephthalate (PET) film with no slip agents added. This film is available as product #OR8478400 obtainable from 3M, St. Paul, MN. After laser exposure each sample was measured for change in optical transmission at 550nm using a Lambda 9 Spectrophotometer from Perkin Elmer (Norwalk, CT) with a 10 second response time. Untreated film was used as a control and measured 88.25% optical transmission. The following data shows the change in % transmission from this control value.

Table 2 shows the results and indicates an increase in optical transmission for PET films treated on one side at 193 nm and an apparent leveling off of the effect with increased fluence. This increasing and then leveling off is due to the depth of treatment increasing with increasing fluence. Also quite noticeable is the threshold effect wherein about 3 $mJ/cm^2$/pulse fluence is required for the onset of this increased transmission. This fluence threshold is noticed on all effects measured for this laser treatment.

Table 2

| Sample | Exposure ($MJ/cm^2$) | % Change in Transmission (at 550nm) |
|---|---|---|
| A | 1 | 0 |
| B | 2 | 0 |
| C | 3 | .03 |
| D | 3 | .08 |
| E | 3 | .10 |
| F | 4 | .18 |
| G | 4 | .37 |
| H | 4 | .45 |
| I | 5 | .58 |
| J | 5 | .78 |
| K | 5 | .82 |
| L | 6 | 1.1 |
| M | 7 | 1.4 |
| N | 8 | 1.28 |
| O | 9 | 1.40 |
| P | 9 | 1.44 |
| Q | 10 | 1.38 |

Laser treatment of polymer films at these fluences does not significantly change the absorptivity of the film at wavelengths greater than 350 nm. Therefore, increased transmission of laser treated films is a result of reduced reflectivity of the film and measurement of either effect is equivalent.

Example 2

The example is a repeat of Example 1 with the exception that the laser gas was a mixture of Kr and F and the output wavelength was 248nm.

The data indicated that there was no change in the optical transmission until fluence exceeded 5mJ/cm. There was an increase of transmission to a peak change of 1.5%, reached at $9mJ/cm^2$. The shift of the fluence threshold to a higher value of about $5mJ/cm^2$/pulse (as compared to Example 1) which indicates a threshold dependence on the wavelength of the radiation used to treat the surface. This occurs because PET more efficiently absorbs 193nm wavelength radiation than it does 248nm wavelength radiation.

Excimer lasers operate efficiently at four different wavelengths: 193, 248, 308, and 351nm. Efficient modification of the polymer requires that most of the UV radiation be absorbed in the first few tenths of a micrometer of of the surface. PET intensely absorbs both 193 and 248 nm. The efficiency of the surface modification also depends on the photolytic activity of the UV. Since 193nm is more strongly absorbed than 248 nm and has higher photolytic activity, 193 nm radiation is slightly more efficient for surface modification. The threshold for surface modification of PET by excimer laser radiation (15 nanosecond pulse width) is 3 to 4 $mJ/cm^2$/pulse for 193nm and $5mJ/cm^2$/pulse for 248nm.

Excimer lasers produce roughly twice as much power at 248nm than 193nm. Since the threshold for surface modifications at 248nm is almost twice that of 193nm, the net efficiency of surface modification between the two wavelengths is nearly equal. Therefore, the choice of the operating wavelength can be based on other factors.

Example 3

Example 1 was repeated using 0.3mm (12 mil) thick amorphous PET extrusion cast from 3M resin ER662000 obtained from 3M, St. Paul, MN. The data obtained on a Lambda 9 Spectrophotometer in the reflectance mode shows that there was no change in reflectance with up to 10mJ/cm$^2$ fluence. This is expected since the film is completely amorphous.

Example 4

Samples of PET were treated at various fluences as in Example 1 and then soaked in trichloromethane solvent for 5 minutes. The solvent was then analyzed by UV absorption for extracted trimers and amorphous PET. Crystalline PET is not soluble in trichloromethane while amorphous PET is soluble in thin layers. The data indicated a constant amount of extract (less than 0.4 micrograms/cm$^2$) below a fluence of 3mJ/cm$^2$/pulse. At about 3.5mJ/cm$^2$/pulse the amount of extract started to increase and increased to a maximum of about 1.6 micrograms/cm$^2$ at 7mJ/cm$^2$/pulse. This amount remained constant to at least 9mJ/cm$^2$/pulse.

Again the fluence threshold phenomena was at about 3.5mJ/cm$^2$/pulse, the amorphous PET extracted increased with increasing fluence, and levelled off at about 7mJ/cm$^2$/pulse.

Examples 3 and 4 give strong indication that the present invention is an amorphized layer created on the bulk polymer surface and further experiments have shown that this layer can be recrystallized.

Example 5

Samples of 0.1 mm (4 mil) PET as in Example 1 were treated with one 7.5 microsecond pulse from an L-2695 flashlamp by ILC Technology, Sunnyvale, California, with a peak current of 1700 amperes, 25 Joules of stored energy and a lamp to sample distance of 1.0cm. Optical ttransmission measurements were made on the treated sample with a Lambda 9 Spectrophotometer and showed an increase in transmission over the measurement range of 340nm to 700nm and at 550nm there was a 1.5% increase. This indicates intense short pulse UV rich flashlamps are also capable of forming amorphous surface on polymers.

Example 6

Samples of PET were treated and measured for optical transmission as in Example 1 and the laser radiation exposure of the sample was varied by changing both the fluence and the number of pulses applied. The data in Table 3 shows the results.

Table 3

| Sample | Appx Fluence mJ/cm$^2$/pulse | Pulses | % Increase in Transmission (at 500nm) |
|---|---|---|---|
| A | 5 | 1 | 1.35 |
| B | 10 | 1 | 2.1 |
| C | 20 | 1 | 2.0 |
| D | 50 | 1 | 0.7 |
| E | 100 | 1 | 0.1 |
| F | 200 | 1 | 0.6 |
| G | 5 | 2 | 2.1 |
| H | 10 | 2 | 1.5 |
| I | 20 | 2 | 1.4 |
| J | 50 | 2 | -0.8 |
| K | 100 | 2 | -2.8 |
| L | 200 | 2 | -3.0 |

It can be seen that at low radiation exposures an increase in optical transmission is achieved. However, at higher exposures the optical transmission decreases. This is caused by photo degradation of the polymer which is manifest by a combination of yellowing of and texturing of the surface.

Example 7

Samples of crystalline polyetheretherketone were treated as in Example 1 at various fluences. Optical transmission of the treated samples was measured at 550nm with a spectrophotometer as in Example 1. The data indicated a reduced reflectivity with increased fluence from 16 to 24mJ/cm$^2$/pulse, from 14.74% reflectivity to 14.60% reflectivity.

Example 8

Samples of PET were treated as in Example 2 at fluences from 1 to 6mJ/cm$^2$/pulse and measured for auto adhesion properties. A model 12ASD heat sealer by Sentinal of Hyannis, MA at 177°C (350°F), 137.88 kPa (20 psi) sealing pressure and a 3 second dwell time was used to seal the treated surfaces to each other. Bond strength was measured by peeling the samples 180° apart by hand and judging the relative peel strength resulting from various fluences. The data showed increased adhesion above a fluence of 4mJ/cm$^2$/pulse. The film had slight adhesion without treatment, and increased to good adhesion at about 6mJ/cm$^2$/pulse.

These data are very similar to those for % increase in transmission of Example 2 and shows substantially the same fluence threshold. This strongly implies that the amorphous surface created by this invention causes both effects.

Example 9

Samples of PET were treated as in Example 1 and measured for autoadhesion properties. A model 12ASD heat sealer by Sentinal of Hyannis, MA at 177°C (350°F), 137.88 kPa (20 psi) sealing pressure and a 3 second dwell time was used to seal the treated surfaces to each other. Bond strength was measured by peeling the samples 180° apart by hand and judging the relative peel strength resulting from the various treatments. Since moisture is known to affect the bond strength of PET treated by other methods, each sample was tested both dry and under running water. Bond strengths were classified as follows: A weak bond was peelable without polymer film failure, a medium bond had a higher peel strength and occasional polymer film failure and a strong bond is not peelable and resulted in polymer film failure. These semiquantitative results are plotted in the Figure.

It is well known in the literature of continuous wave, low to moderate intensity UV lamps, that surface modification of polymers is energy density insensitive. That is, if for example, 100mJ/cm$^2$ is required to modify a polymer in a certain manner, it doesn't matter if that energy density is obtained by using an intensity of 100 watts/cm$^2$ for 1 second or 50 watts/cm$^2$ for 2 seconds and it has always been assumed that this was inviolate up to the energy region required for photoablation. The line indicating constant energy density of the Figure illustrates this conventional wisdom and is substantiated by experiments up to a certain fluence.

The surprising discovery of this invention is that at a certain threshold fluence, in this case 3.5 mJ/cm$^2$/pulse, there is an enormous decrease in energy density required to produce auto adhesion. The explanation of this phenomenon is believed to be that at low fluences, auto adhesion is the result of oxidation of the surface layer, whereas above the threshold fluence an amorphous surface layer is created with a lower softening temperature than the bulk polymer which results in the increased auto adhesion. It can be seen that in the region of ablation or microtexturing, the auto adhesion for this polymer is also very strong. This is another surprising discovery of this invention and is due to a reduced softening temperature of structures generated on the polymer surface.

From the Figure, it is apparent that amorphization can be achieved with one pulse if the fluence level is within certain ranges, and increasing the number of pulses at a particular fluence increases the depth of treatment until at too high a pulse count the polymer starts to photo degrade significantly.

Example 10

Samples of PET as in Example 1 were treated with various exposure to a CW short wave UV from a 6 watt model ENF-26 Spectronics lamp of Westbury, NY. The lamp was placed directly on the polymer

surface for 1 minute, 15 minute, and 35 minutes. The exposed samples and an unexposed control were then sealed to themselves using a Model 12ASD heat sealer from Sentinal of Hyannis, MA set at 177°C (350°F), 137.88 kPa (20 psi) sealing pressure for 3 seconds. Auto adhesion bond strength was measured by peeling the sealed samples 180° apart by hand and judging the resulting relative peel strength. Samples were also tested under running water for moisture bond strength. The results are shown in Table 4.

Table 4

| Exposure | Adhesion | Moisture Sensitivity |
|---|---|---|
| 0 min | no adhesion | NA |
| 1 min | no adhesion | NA |
| 15 min | moderate adhesion | yes |
| 35 min | moderate adhesion | yes |

Auto adhesion of PET from CW UV lamps is caused by surface oxidation and as can be seen gives a very different bond than PET laser treated as in Example 9.

Example 11

A sample of PET was treated with short pulse UV flashlamps as in Example 5. A hand sealing iron at 145°C was used to bond two samples to each other for six seconds. The samples showed good adhesion by attempting to peel the sample apart with a 180° hand pull. The bond was similarly tested under running water and was found to be moisture insensitive.

Example 12

Samples of .038 mm (1.5 mil.) Nylon 66 from Allied Corp., Morristown, NJ, Product ID Capran-996 was exposed to one pulse of 25 $mJ/cm^2$ as in Example 1. The samples were bonded to each other using a fiberglass covered hand sealing iron at 143°C for 6 seconds. Untreated control samples showed no auto adhesion while the exposed samples showed good adhesion by attempting to peel them apart with a 180° hand pull. The samples were boiled in water for 15 minutes and there was little to no perceptible decrease in bond strength.

Example 13

Samples of PET were treated at two pulses at 5 $mJ/cm^2$/pulse as in Example 1. These PET samples were bonded to the treated Nylon 66 samples of Example 12 using the same sealing conditions as Example 12. Peel tests using a 180° hand pull indicated good adhesion between the samples.

Example 14

Samples of a coated PET film were treated as in Example 1. The coating was 0.002 mm (.08 mil) of a solution of a copolymer of 75% polyvinylidene dichloride (PVDC) and 25% acrylonitrile and was coated on 0.0127mm (.5 mil) PET. This film product is available as Scotchpar 86096 from 3M, St. Paul, MN. At about 130°C the coated side of this film is normally autoadhesive. This example shows the reduced temperature required to produce autoadhesion by first treating it with a UV laser. The samples were sealed to themselves at 110°C, 137.88 kPa (20 psi) and 3 seconds dwell time using a model 12ASD Sentinal heat seater from Hyannis, MA. The bonds were tested using a 180° hand pull and the results are shown in Table 5.

Table 5

| Sample | Fluence | # Pulses | Bonding Results |
|---|---|---|---|
| A | 3.0 | 5 | slight |
| B | 3.5 | 5 | tack |
| C | 4.1 | 5 | excellent-film failure |
| D | 4.7 | 5 | excellent-film failure |
| E | 5.5 | 5 | excellent-film failure |
| F | 7.8 | 5 | excellent-film failure |
| G | 10.4 | 5 | excellent-film failure |
| H Control | 0 | 0 | easily peeled |

As can be seen, above the fluence threshold of about 4mJ/cm$^2$/pulse, the bond strength was excellent and the peel test caused the film to fail. This example also shows that the addition of a U.V. absorber (acrylonitrile) allows amorphization of a normally non-UV absorbing crystalline polymer (PVDC).

Example 15

Samples of PET were laser treated as in Example 1 at a fluence of 5mJ/cm$^2$/pulse for 5 pulses and then coated with 0.001 mm (0.05 mil) of series 93 white printing ink from Inmont Corp, Clifton, NJ and dried at 82°C (180°F) for 24 seconds. Ink adhesion was tested by placing #610 adhesive tape from 3M, St. Paul, MN on the razor scribed inked surface and rapidly snap peeling the tape off. The ink on an untreated control sample was easily removed by the tape test but completely remained on the treated samples. A more aggressive adhesive tape, type 622 sold by 3M, St. Paul, MN was next used and again the control sample ink coating was removed. The ink on the treated sample coating was not removed and furthermore, the adhesive of the 622 tape remained on the ink coating.

Ink adhesion is directly related to auto adhesion by the increased adherability created by the laser treated amorphous surface layer on the polymer film. Therefore, the threshold fluence effects experienced in autoadhesion is expected to occur also with ink adhesion.

Example 16

Samples of TCG 374-2 polyvinylchloride (PVC) film (which incorporates a polyester plasticizer) available from 3M, St. Paul, MN, was laser treated as in Example 1 to 2 pulses at a fluence of 10, 20 or 30mJ/cm$^2$/pulse. These samples, along with an untreated control, were screen printed with a PE 225 mesh with 6605 ink from 3M, St. Paul, MN. Samples were tested with #610 ink snap test as in Example 15 immediately after ink coating, after aging for 24 hours at 65°C (150°F) and after aging for 4 days at 65°C (150°F). The results are shown in Table 6.

Table 6

| 610 Tape with Razor Scribe | |
|---|---|
| | % Ink Peel |
| (Unaged) | |
| Untreated Control | 2 |
| 10 $mJ/cm^2$ 2 pulses | 0 |
| 20 $mJ/cm^2$ 2 pulses | 0 |
| 30 $mJ/cm^2$ 2 pulses | 0 |
| (24 Hrs - 65°C (150°F) | |
| Untreated Control | 95 |
| 10 $mJ/cm^2$ 2 pulses | 0 |
| 20 $mJ/cm^2$ 2 pulses | 0 |
| 30 $mJ/cm^2$ 2 pulses | 0 |
| (4 days - 65°C (150°F) | |
| Untreated Control | 98 |
| 10 $mJ/cm^2$ 2 pulses | 0 |
| 20 $mJ/cm^2$ 2 pulses | 0 |
| 30 $mJ/cm^2$ 2 pulses | 10 |

This data shows that laser treatment dramatically improves ink adhesion to PVC and that the sample treated at a fluence of 30mJ/$cm^2$/pulse with 2 pulses and aged for 4 days at 150°F (65°C) shows a real (and reproducible) decrease in ink adhesion compared to exposure to lower fluences. (This effect becomes more noticeable at higher fluences.) The data at high fluence is contrary to that of Japanese patent applications JA59-82380, JA59-101937 and JA55-101938 wherein upon treatment at high fluences, good adhesion is claimed.

Example 17

A coating of approximately 0.01 mm (0.5 mil) dimethylacrylamide (DMA) was hand spread on the treated surfaces of samples of PET which had been laser treated at a fluence of 12mJ/$cm^2$/pulses and two pulses as in Example 2. These coated samples were then irradiated at 175 KEV with a dose of 0.5 to 10 Mrad in a nitrogen atmosphere with a Model 250 Electrocurtain® electron beam from Energy Science, Inc., Woburn, MA.

The treated samples were then refluxed for 24 hours in dichloromethane to extract any DMA homopolymer that was not bonded to the PET substrate, and then the reflux solvent was discarded. The samples were then analyzed for the amount of DMA bonded to the PET surface by transmission Fourier Transform Infrared Spectroscopy (FTIR). The analysis results shown in Table 7 are ratios of the peak absorbance of an infrared absorption characteristic of polymerized DMA to that of infrared absorption characteristic attributed to PET. These numbers are indicative of the amount of DMA bonded to the surface of the PET and the higher the number, the more DMA was bonded. Reported results under about 0.4 are not considered significant and due to system noise.

Table 7

| Dose (Mrad) | Untreated PET | Laser Treated PET |
|---|---|---|
| 0.5 | 0.00 | 0.14 |
| 1.0 | 0.00 | 0.45 |
| 3.0 | 0.00 | 0.35 |
| 5.0 | 0.42 | 0.87 |
| 10.0 | 1.05 | 2.06 |

This data shows significantly improved bonding of DMA to the laser treated PET above about 5 Mrad.

Example 18

A coating of approximately 0.01 mm (0.5 mil) 90/10 mixture of DMA and trimethylol propane triacrylate (TMPTA) was hand spread on the treated surfaces of samples of PET which had been laser treated at a fluence of 12mJ/cm$^2$/pulse and 2 pulses as in Example 2 and further processed exactly as in Example 17 above. The FTIR results are shown in Table 8.

Table 8

| Dose (Mrad) | Untreated PET | Laser Treated PET |
|---|---|---|
| 0.5 | 0.02 | 0.40 |
| 1.0 | 0.56 | 0.45 |
| 3.0 | 0.45 | 3.17 |
| 5.0 | 0.19 | 3.53 |
| 10.0 | 0.45 | 2.08 |

This data shows significantly improved bonding of DMA/TMPTA to the laser treated PET above about 3 Mrad.

Example 19

The object of this example is to show that the enhanced bondability of the DMA/TMPTA to laser-treated PET was due to the amorphous surface layer produced on the PET by laser treatments. A sample of PET, as in Example 1, was spin coated with a solution of the same PET dissolved in orthochlorophenol to give a 100nm coating thickness. Since this coating is amorphous, the coated sample was annealed in a model 5861 oven by National Appliance Company in a nitrogen atmosphere at 230°C for 3 hours to allow the coating to crystallize. A second sample of PET was coated with the same PET dissolved in orthochlorophenol to give a 100nm coating thickness and dried in an oven at 60°C for 1 hour. Since this temperature is below the glass transition temperature of the PET coating, the coating remained amorphous. Each sample was coated with DMA/TMPTA as in Example 17 and E Beam cured at 5 Mrad. The samples were then analyzed for FTIR ratios as in Example 16 and the results were 0.27 for the annealed and crystallized sample and 2.81 for the amorphous sample. This data shows the bondability of DMA/TMPTA to PET is enhanced by an amorphous surface layer.

Example 20

Samples of PET were laser treated as in Example 1 with 10 pulses of fluence of 5mJ/cm$^2$/pulse and then rapidly passed through a solution of methylene chloride at 25°C for a time which varied between 2 and 7 seconds. The methylene chloride was allowed to flash off. Visual inspection of these samples indicated no diminution of the film transparency. TEM photomicrographs (32000X) showed small irregularly shaped pitted texture of about 20-40 nm (200 - 400Å) depth. Coefficients of friction (COF) were measured for the various samples in accordance to ASTM - D1894 and the results are shown in Table 9.

Table 9

| Film Sample | Contacting Surfaces | U Static | U Kinetic |
|---|---|---|---|
| Biax-no treatment<br>$CH_2Cl_2$ Treated | | >5.00<br>4.30 | >5.00<br>3.50 |
| Laser-treated | LT*/LT<br>LT/Untreated | 1.50<br>1.10 | 0.45<br>0.43 |
| Laser + $CH_2Cl_2$ | LT/LT<br>LT/Untreated | 0.57<br>0.40 | 0.42<br>0.45 |
| Laser + $CH_2Cl_2$(Vapor) (Exposed to saturated vapor at 25°C for 1 hour) | LT/LT<br>LT/Untreated | >5.00<br>0.57 | 1.50<br>0.50 |

* LT designates the surface exposed to the laser radiation

Although the operative mechanism is not understood, it can be seen that laser treatment of PET followed by a subsequent exposure to methylene chloride significantly reduces both the static and kinetic coefficient of friction of PET on itself. It is also apparent that methylene chloride treatment or laser treatment seperately by themselves are not as effective as the combination of the two together.

Example 21

The object of this example is to relate the amorphous polymer surface structure created by U.V. laser treatment to the functional results achieved as described in the previous examples. PET as described in Example 1 was dissolved in o-chlorophenol and spin coated to give a final PET thickness of 174 nm (1740Å) on 75mm (3 inch) circular polished silicon wafers, which had previously been vapor coated with 150 nm (1500 Angstroms) of aluminum. The wafers were dried at 80°C for 1/2 hour in a laboratory oven with a nitrogen atmosphere. They were then crystallized at 220°C for 3 hours in the oven with nitrogen.

These samples were laser treated at 193nm as in Example 1 at various fluences.

The analysis of the surface amorphization of these samples caused by the U.V. treatment was done by a modified form of FTIR using low angle grazing infrared light with a technique known as Infrared Reflection Absorption Spectroscopy (IRRAS) as described in Applied Spectroscopy Vol. 39, 1985, p. 269. Crystalline PET is highly absorbing of 7440nm light while amorphous PET is almost transparent to this wavelength. Therefore, the % change in absorption, as measured by IRRAS, is a sensitive indicator of polymer crystallinity. The data indicates that this % change is a function of laser treatment fluence where zero is no change from the untreated sample.

The data showed the characteristic threshold fluence effect at about 4.5mJ/cm$^2$/pulse for PET followed by an increase in the degree of amorphicity. This direct measurement of the amorphicity of the treated surface follows the general form of effects versus fluences as shown in the previous examples.

Example 22

The object of this example is to show the temperature sensitivity of the threshold fluence phenomena of laser amorphization.

The measurements of absorptivity necessary to produce the data of this example were made immediately after laser treatment while each sample was at the treatment temperature to insure that recrystallization of the sample did not affect the measurement.

Samples of PET on wafers were prepared as in Example 21 at a thickness of 165 nm (1650 Angstroms). The samples were laser treated at 248nm as in Example 2 at various fluences. Each sample was also controlled in temperature by placement on a laboratory hot plate. Amorphization of the treated samples was measured by layer absorptivity at 7440nm using IRRAS with a diode laser source by Spectra Physics, Bedford, MA, and a Model GA-STD-1.0-40742 photodetector by SBRC, Goleta, CA immediately after laser treatment and while the sample was at its controlled temperature. This amorphization versus fluence data was plotted and extrapolated to obtain the threshold fluence at each temperature of treatment.

The data shows that the threshold fluence for amorphization is strongly temperature dependent below the polymer melting temperature and is a direct result of laser energy needed to overcome the heat capacity of the polymer. At the polymer melting temperature heat of fusion controls the minimum threshold

fluence necessary to cause surface layer amorphization. This threshold fluence versus temperature effect is expected to apply to all semicrystalline polymers.

This data indicates that the amount of laser energy necessary for amorphization can be decreased by supplementary heating of the polymer to a temperature somewhat below its melting point, thus producing a more efficient process.

Example 23

The object of this example is to show the gradient of amorphicity throughout the surface produced by the laser treatment of this invention.

A PET sample prepared as in Example 21 with a coating thickness of 120 nm (1200Å) was treated to 2 pulses at 10mJ/$cm^2$/pulse as in Example 1.

Depth profiling was achieved using a combination of two analytical techniques. IRRAS, as described in Example 19, was used to characterize the degree of amorphization and oxygen plasma etching was used to successively remove layers of treated polymer.

Oxygen plasma etching was done directly in the IRRAS sample chamber using 2.66 Pa (0.02 torr) of oxygen flowing at a rate of 7.5 $cm^3$/min,excited with a 13.6 MHz radio frequency discharge with an energy density of 380mW/$cm^2$ for 28 seconds. Each application of this treatment removed 13 nm (130Å) of material.

The amorphization depth profiling of the laser treated sample was obtained by repeating the sequence of IRRAS absorptivity measurements and oxygen plasma etching. The data showed increasing amounts of crystallinity from 0 to 100nm.

The data showed that the surface of the treated polymer has been completely amorphized. This complete amorphization extended a considerable distance into the treated layer and the amorphization gradiant was relatively steep at the transition between treated layer and bulk polymer.

Example 24

Samples of PET on wafers were prepared as in Example 21 at a thickness of 93 nm (930Å) and crystallized at 230°C for 3 hours in a vacuum oven. These samples were exposed through a mask to 3 pulses of 10mJ/$cm^2$/pulse as in Example 2 and then immersed in liquid trichloromethane for 5 minutes. Optical microscopy showed complete removal of the laser produced amorphized layer resulting in very sharp images produced in the PET on the wafer. This is a unique method for accomplishing photolithography and producing image texture on bulk films.

This process should work on any UV absorbing semicrystalline polymer as well as organic or inorganic materials which can be amorphized by this invention.

This example, combined with Example 22, allows the use of temperature to control the sensitivity of the process as well as a means of controlling image contrast within the polymer.

Example 25

A 0.1 mm biaxially oriented poly(ethylene terephthalate) film containing no slip particles was subjected to 5 pulses of radiation from an argon-fluorine excimer laser emitting at 193 nm at a fluence per pulse of 10 mJ/$cm^2$. Samples were cut from this treated film and passed rapidly through a pool of methylene chloride at 25°C, a treatment which effectively removes most of the affected surface area. Total exposure time to the $CH_2Cl_2$ liquid varied between 2 and 7 seconds. The solvent was allowed to flash off. Inspection of the samples indicated no visual diminution of film transparency.

The surface textures of some of these films were studied at 32,000X magnification via transmission electron microscopy of shadowed surface replicas. The surface of the laser-treated PET, prior to solvent treatment, was characterized by shallow, randomly spaced, and irregularly shaped features which measured no more than 60 nm (600 Angstroms) in their largest dimension. Exposure of the film to liquid methylene chloride created a more uniformly textured surface characterized by closely spaced nodular features between 15 and 60 nm (150 and 600 Angstroms) across. (Prior to treatment of any kind, biaxially oriented PET film was found to have a smooth but somewhat nodular texture on a size scale of about 15 to 60 nm (150 to 600 Angstroms) with a very small peak-to-valley ratio. Methylene chloride (liquid) treatment of this untreated surface introduced no discernible change in surface texture).

Table 2

| Sliding Film Surfaces | μ Static | μ Kinetic |
|---|---|---|
| Biax/Biax | >5 | >5 |
| $CH_2Cl_2$ Treated/$CH_2Cl_2$ Treated | 4.3 | 3.5 |
| Laser Treated (LT)/LT | 1.5 | 0.45 |
| LT/Biax | 1.1 | 0.43 |
| LT + $CH_2Cl_2$/LT + $CH_2Cl_2$ | 0.57 | 0.42 |
| LT + $CH_2Cl_2$/Biax | 0.40 | 0.45 |
| LT + $CH_2Cl_2$(V)*/Biax | 0.57 | 0.50 |

*Film, following laser treatement, was exposed to saturated vapor of $CH_2Cl_2$ at 25 ° C for one hour.

Example 26

A second, similarly made laser-treated PET was found to be essentially featureless in TEM micrographs (32,000X) of shadowed replicas. Washing in acetone created a uniformly reticulated surface having nodular rather than granular features (rounded rather than sharp) with a maximum peak-to-valley depth of about 20 nm (200Å). As with methylene chloride, acetone washing of biaxially oriented PET film produces no discernible change in its surface texture.

Coefficient of friction data for these samples are tabulated below:

| Sliding Film Surfaces | μ Static | μ Kinetic |
|---|---|---|
| Biax/Biax | >5 | >5 |
| Acetone washed Biax/Biax | >5 | >5 |
| Laser treated + acetone/Biax | 0.53 | 0.37 |

Examples 27-41

Metallic PVC film (PVC with a metal additive which provides a metallic appearance), white PVC film and transparent PVC film were treated according to the procedures of Example 1 using a 193 nm Ar F excimer laser at 20 mJ/$cm^2$ (2 pulses). At this fluence, the films were irradiated above the threshold energy to allow the surface to become amorphous. These films were laminated to the five different commercially used acrylate pressure-sensitive adhesives. Ply adhesion results are as follows:

Table 2

| Precoated Adhesive | Laser Treatment | 90° Peel N/m (lbs/inch) | | |
|---|---|---|---|---|
| | | Metallic PVC | White PVC | Transparent PVC |
| A (Solvent) | Yes | 0.51 (4.5) | 0.44 (3.9) | 0.56 (5.0) |
| A (Solvent) | No | 0.32 (2.8) | 0.34 (3.0) | 0.48 (4.3) |
| B (Melt) | Yes | 0.41 (3.6) | 0.42 (3.7) | 0.52 (4.6) |
| B (Melt) | No | 0.06 (0.5) | 0.37 (3.3) | 0.45 (4.0) |
| C (Solvent) | Yes | 0.34 (3.0) | 0.51 (4.5) | 0.54 (4.8) |
| C (Solvent | No | 0.15 (1.3) | 0.50 (4.4) | 0.48 (4.3) |
| D (Melt) | Yes | 0.45 (4.0) | 0.51 (4.5) | 0.56 (5.0) |
| D (Melt) | No | 0.11 (1.0) | 0.39 (3.5) | 0.51 (4.5) |
| E (Solvent) | Yes | 0.44 (3.9) | 0.47 (4.2) | 0.65 (5.8) |
| E (Solvent) | No | 0.29 (2.6) | 0.41 (3.6) | 0.56 (5.0) |

The results show that the greatest improvement in ply adhesion was observed on melt adhesives in

combination with poly(vinyl chloride) metallic films. The adhesives referred to as melts are pressure-sensitive adhesives known in the art as "polymelts". These adhesives are applied by melt extrusion and remain tacky (i.e., pressure-sensitive) after coating and cooling. The solvent coatings of pressure-sensitive adhesives were solvent cast and dried.

The pressure-sensitive adhesives used in Examples 27-41 are all acrylate pressure-sensitive adhesives and have the following compositions by weight:

| | | |
|---|---|---|
| A. | Isooctylacrylate<br>Acrylic acid<br>Hydrogenated resin ester (tackifier)<br>Bis-amide (crosslinking agent) | 93.0<br>7.0<br>16.4<br>3 |
| B. | 2-methylbutylacrylate<br>Acrylic acid<br>Benzophenone (crosslinking agent) | 90<br>10<br>0.5 |
| C. | 2-methylbutylacrylate<br>Acrylic acid<br>Bis-amide (crosslinking agent) | 90<br>10<br>3 |
| D. | Isooctylacrylate<br>Methacrylate<br>Acrylic acid<br>Benzophenone | 60<br>32.5<br>7.5<br>0.5 |
| E. | Isooctylacrylate<br>Methacrylate<br>Acrylic acid<br>Bis-amide (crosslinking agent) | 60<br>32.5<br>7.5<br>3 |

## Example 42

A coating of approximately 0.01 mm (0.5 mil) dimethylacrylamide (DMA) was hand spread on the treated surfaces of samples of PET which had been laser treated at a fluence of $12mJ/cm^2$/pulses and two pulses as in Example 2. These coated samples were then irradiated at 175 KEV with a dose of 0.5 to 10 Mrad in a nitrogen atmosphere with a Model 250 Electrocurtain(R) electron beam from Energy Science, Inc., Woburn, MA.

The treated samples were then refluxed for 24 hours in dichloromethane to extract any DMA homopolymer that was not bonded to the PET substrate, and then the reflux solvent was discarded. The samples were then analyzed for the amount of DMA bonded to the PET surface by transmission Fourier Transform Infrared Spectroscopy (FTIR). The analysis results shown in Table 3 are ratios of the peak absorbance of an infrared absorption characteristic of polymerized DMA to that of infrared absorption characteristic attributed to PET. These numbers are indicative of the amount of DMA bonded to the surface of the PET and the higher the number, the more DMA was bonded. Reported results under about 0.4 are not considered significant and due to system noise.

Table 3

| Dose (Mrad) | Untreated PET | Laser Treated PET |
|---|---|---|
| 0.5 | 0.00 | 0.14 |
| 1.0 | 0.00 | 0.45 |
| 3.0 | 0.00 | 0.35 |
| 5.0 | 0.42 | 0.87 |
| 10.0 | 1.05 | 2.06 |

This data shows significantly improved bonding of DMA to the laser treated PET above about 5 Mrad.

Example 43

A coating of approximately 0.01 mm (0.5 mil) 90/10 mixture of DMA and trimethylol propane triacrylate (TMPTA) was hand spread on the treated surfaces of samples of PET which had been laser treated at a fluence of 12mJ/cm$^2$/pulse and 2 pulses as in Example 2 and further processed exactly as in Example 17 above. The FTIR results are shown in Table 4.

Table 4

| Dose (Mrad) | Untreated PET | Laser Treated PET |
|---|---|---|
| 0.5 | 0.02 | 0.40 |
| 1.0 | 0.56 | 0.45 |
| 3.0 | 0.45 | 3.17 |
| 5.0 | 0.19 | 3.53 |
| 10.0 | 0.45 | 2.08 |

This data shows significantly improved bonding of DMA/TMPTA to the laser treated PET above about 3 Mrad.

Example 44

Laser Treated Poly(ethylene terephthalate) for Adhesion to Acrylic Thermoplastic

Poly(ethylene terephthalate) film of 0.1 mm (4 mil) caliper was treated with a 193 nm UV laser with the following ablative conditions according to the teachings of U.S. 4,417,948:

31.4 mJ/cm$^2$/pulse, 25 pulses, 60 degree incidence.

The resulting film was laminated to an adhesive coated silicone release liner. The precoated adhesive on the release liner is a dual layer consisting of a pressure sensitive species of formula isooctylacrylate/acrylic acid (95.5/4.5), and an overcoat layer of thermoplastic resin of formula isooctylacrylacrylate/N-(1,1,3,3-tetramethyl-n-butyl-acrylamide/acrylic acid (50/37/13). The lamination is effected by bringing the primed surface of the PET film into contact with the thermoplastic resin under the following conditions with a commercial film laminator:

Roller speed of 25.4 cm/min (10 inches/min)

Roller temperature of 127°C (260°F)

Roller nip pressure of 172.27 kPa (25 lbs/sq inch).

The silicone liner was removed from the resulting laminate, and the exposed pressure sensitive adhesive squeegee-burnished, under ambient conditions, against plate glass. After a one minute dwell time the burnished film is pulled from the glass. The laser treated PET demonstrated no delamination of the adhesive to the glass. This is in contrast to untreated PET which shows total adhesive transfer to glass.

Example 44

This example describes the treatment of a surface of a 0.1 mm thick poly(vinyl chloride) film. The composition of the film was 100 parts by weight of poly(vinyl chloride) having an average molecular weight of 320,000, thirty-seven (37) parts by weight of diisononyl phthalate, three (3) parts by weight of a stabilizer, 2,2'methylenebis(4-methyl-6-tert-butylphenol), and one (1) part by weight carbon black.

The samples of this film were subjected to 2 pulses from a 193 nm emitting ArF excimer laser at 10mJ/cm$^2$. Treated films were then first coated with a 5% solution of benzophenone in isopropanol, then coated with a 0.025 mm wet coating of trimethylol propane triacrylate monomer containing 1% by weight of an inert fluorocarbon surfactant. The samples were then cured by ultraviolet radiation at 200 watts under a nitrogen atmosphere. Film samples that were not treated with the excimer laser were identically coated.

Samples of both types of films were cut into 5 cm by 5 cm squares, weighed, placed into 100 ml of at 30:70, toluene:heptane solution and shaken for 2 hours at 40°C. After drying at 20°C for 16 hours and reweighing, it was found that the non-treated samples lost approximately thirty percent of the plasticizer while the excimer treated samples lost less than 2% of the plasticizer.

Example 45

The radiation treated article of Example 45 had the barrier layer coated from solvent with an acrylic pressure-sensitive adhesive comprising 93 parts isooctylacrylate, 7 parts acrylic acid, 16.4 parts hydrogenated resin ester (tackifier), and 3 parts bis-amide (cross-linking agent). The properties of the adhesive remained stable over an extended period of time. This was clearly in part due to the lack of plasticizer migration into the adhesive from the poly(vinyl chloride) film.

## Claims

**1.** A polymeric article comprising a semicrystalline polymer having on at least one surface thereof areas having thicknesses of at least 5 nm of the same polymer in a quasi-amorphous state.

**2.** The article of claim 1 wherein at least 1% of said at least one surface is quasi-amorphous and the atom/atom, oxygen/carbon ratio of the quasi-amorphous areas is the same or less than that ratio in the semicrystalline polymer.

**3.** The article of any preceding claim wherein said areas have a depth of at least 10 nm and comprise from 5 to 100% of said at least one surface.

**4.** The article of any preceding claim wherein said semicrystalline polymer is in the form of a layer, sheet, film or coating.

**5.** The article of any preceding claim wherein said areas comprise 30 to 100 percent of said at least one surface and the atom/atom, oxygen/carbon ratio of the quasi-amorphous areas is the same or less than that ratio in the semicrystalline polymer.

**6.** The article of claim 5 wherein said areas comprise 80 to 100 percent of said at least one surface.

**7.** The article of any preceding claim wherein the quasi-amorphous area has a thickness of at least 5 nm beginning at the surface of said polymeric article.

**8.** The article of any preceding claim wherein the quasi-amorphous area has a thickness of between 20 and 500 nm.

**9.** The article of any preceding claim wherein said quasi-amorphous area has a thickness in the range of 5 to 10,000 nm.

**10.** The article of any preceding claim wherein said quasi-amorphous area has an optical density, in the absence of dyes or pigments, which differ from that of the semicrystalline polymer by less than 0.1 in the visible region of the electromagnetic spectrum.

**11.** The article of any preceding claim wherein said semicrystalline polymer contains at least 0.05% by weight of a radiation absorbing dye or pigment.

**12.** The article of any preceding claim wherein said semicrystalline polymer comprises a polymer selected from poly(vinyl chloride), poly(vinylidene chloride), polytetrafluoroethylene, nylon, polyurethane, polyester, polyolefin, and copolymers thereof.

**13.** The article of any preceding claim wherein the surface is smooth and has a reflectivity of 9% or less to 550 nm radiation at an incident angle between 80 and 90°.

**14.** A polymeric article according to any preceding claim, wherein said areas in a quasi-amorphous state are characterized by having short-range ordering of the polymer consistent with an amorphous state of said polymer and having long-range ordering of the polymer consistent with a semicrystalline state of said polymer.

**15.** A process for modifying the surface of a semicrystalline polymer which process comprises irradiating at least one surface of a semicrystalline polymer composition with radiation which is absorbed by said composition, controlling the intensity and fluence of said radiation exposure so that semicrystalline

polymer on said surface is melted and allowing said melted polymer to cool at a rate which will form a quasi-amorphous polymeric area on said at least one surface characterized in that there is ablation or volatilization of less than 1% by weight of the total weight of the polymer within regions of said polymer which are melted.

**16.** A process for modifying the surface of a semicrystalline polymer which process comprises irradiating at least one surface of a semicrystalline polymer composition with radiation which is absorbed by said composition, controlling the intensity and fluence of said radiation, exposure so that semicrystalline polymer on said surface is melted and allowing said melted polymer to cool at a rate which will form a quasi-amorphous polymeric area on said at least one surface such that some long range ordering typical of crystalline polymeric structure is maintained within the quasi-amorphous surface formed by said melting and cooling.

**17.** A process for modifying the surface of a semicrystalline polymer which process comprises irradiating at least one surface of a semicrystalline polymer composition with radiation which is absorbed by said composition, controlling the intensity and fluence of said radiation exposure so that semicrystalline polymer on said surface is melted and allowing said melted polymer to cool at a rate which will form a quasi-amorphous polymeric area on said at least one surface, said quasi-amorphous polymeric area having a latent memory for the crystalline orientation of said semicrystalline polymer composition.

**18.** A process for modifying the surface of a semicrystalline polymer which process comprises irradiating at least one surface of a semicrystalline polymer composition with radiation which is absorbed by said composition, controlling the intensity and fluence or said radiation exposure so that semicrystalline polymer on said surface is melted and allowing said melted polymer to cool at a rate which will form a quasi-amorphous polymeric area on said at least one surface wherein some molecular orientation is maintained within the said quasi-amorphous surface formed by said melting and cooling.

**19.** The process of any one of claims 14, 15, 16, 17 and 18 wherein said melting occurs to a depth of at least 5 nm and wherein melting occurs over an area of at least 30 to 100% of said at least one surface.

**20.** The process of any one of claims 15 to 19 wherein said radiation is selected from ultraviolet radiation, visible radiation and infrared radiation.

**21.** The process of any one of claims 15 to 20 wherein dye or pigment is present in said polymer to absorb said radiation.

**22.** The process of any one of claims 15 to 21 wherein 80 to 100% of the surface area of said at least one surface is rendered quasi-amorphous to a depth of from 20 to 250 nm and wherein said semicrystalline polymer comprises a polymer selected from poly(vinyl chloride), polyester, poly(vinylidene chloride), poly(tetrafluoroethylene), nylon, polyurethane, and polyolefin.

**23.** The process of any one of claims 15 to 22 wherein said at least one surface is rendered quasi-amorphous so that the optical density within the visible region of the electromagnetic spectrum of said polymer after the surface has been rendered quasi-amorphous, without consideration of the optical effects of dyes or pigments in said semicrystalline polymer, is within 0.1 of the optical density prior to the surface being rendered quasi-amorphous.

**24.** The process of any one of claims 15 to 23 wherein the atom/atom, oxygen/carbon ratio of the quasi-amorphous areas is the same or less than that in the semicrystalline polymer.

**25.** The process of any one of claims 15 to 24 wherein the radiation used is ultraviolet radiation.

**26.** The process of any one of claims 15 to 25 wherein the polymer is heated above 30°C during irradiation.

**27.** The process of any one of claims 15 to 26 wherein the surface having quasi-amorphous areas is treated with corona discharge after irradiation.

**28.** The process of any one of claims 15 to 27 wherein irradiation is by pulses of less than 100 microseconds.

**29.** A process as in any one of claims 15 to 28 for modifying the surface of a semicrystalline polymer which process further comprises exposing said surface layer to a liquid solvent material which promotes crystallization within said quasi-amorphous area or exposes the underlying semicrystalline polymer.

**30.** The process of any one of claims 15 to 29 wherein said fluence of said radiation is in the range 3-25 $mJ/cm^2$/pulse.

**31.** The process of claim 30 wherein said fluence is 5 $mJ/cm^2$/pulse.

**32.** The process of claim 22 wherein said polymer comprises polyethylene terephthalate.

**33.** A process for reducing the kinetic and static coefficient of friction for a polymer surface comprising providing a polymeric article according to any one of claims 1 to 14 and then exposing said at least one surface to a liquid solvent material which promotes crystallization within said areas.

**34.** A process of bonding the polymeric article of any one of claims 1 to 14 having an adhesive on said at least one surface, said process comprising contacting said adhesive material to another surface under conditions of heat, pressure or other applied energy sufficient to cause bonding of said adhesive to said another surface.

**35.** A polymeric article according to any one of claims 1 to 14 having a continuous film comprising an organic polymer on said at least one surface and an adhesive adhered to said organic polymer.

**36.** The article of claim 35 wherein said semicrystalline polymer contains plasticizer and said organic polymer is less penetrable by said plasticizer than said semicrystalline polymer.

**37.** The article of claim 36 wherein said semicrystalline polymer comprises poly(vinyl chloride) and said adhesive is a pressure-sensitive adhesive.

**38.** The article of claim 37 wherein said pressure-sensitive adhesive comprises a polyacrylate or polyurethane.

**39.** A process for heat sealing two articles together, said process comprising providing at least one polymeric article according to any one of claims 1 to 14, and then heating said at least one surface of said polymeric article while it is in contact with another article.

**40.** A process according to claim 39 for heat sealing two articles heating is to a temperature above Tg for the polymer and said areas of quasi-amorphous polymer crystallize upon cooling.

**41.** A polymeric article according to any one of claims 1 to 14 said at least one surface having an imagewise, discontinuously distributed material over at least a portion of that surface which provides a transmission or reflection optical density of at least 0.2.

**42.** The article of claim 41 wherein the material is selected from inks, toners, dyes and pigments.

**43.** A process as claimed in claim 15 where there is ablation or volatilization of less than 0.1% by weight of the total weight of the polymer, and where a material is adhered to said at least one surface which provides a transmission or reflection optical density of at least 0.2.

**44.** A polymeric article comprising a semicrystalline polymer or copolymer according to any one of claims 1 to 14 containing at least one migratory ingredient and adhered to said at least one surface a second polymer less penetrable by said migratory ingredient than said semicrystalline polymer or copolymer.

**45.** The article of claim 44 wherein said polymer or copolymer comprises poly(vinyl chloride).

**46.** The article of claim 45 wherein said migratory material comprises a plasticizer.

**47.** A process for reducing the migration of migratory materials from film comprising a semicrystalline polymer, said process comprising modifying the surface of a semicrystalline polymer by carrying out the process as described in any one of claims 15 to 32, and then coating said at least one surface with a polymer that is less penetrable by said migratory material in said composition than is said composition.

**48.** The process of claim 47 wherein melting occurs to a depth of at least 5 nm and said polymer comprises poly(vinyl chloride).

**49.** The process of claim 47 wherein melting occurs to a depth of at least 10 nm, said polymer comprises poly(vinyl chloride) and said migratory material comprises a plasticizer.

**50.** The process of any one of claims 47 to 49 wherein said second polymer comprises an acrylic polymer or polyurethane.

**51.** A polymeric article according to any one of claims 1 to 14 wherein said semicrystalline polymer is a semicrystalline polymer or copolymer containing at least one migratory ingredient having on at least one surface thereof areas having thicknesses of at least 5 nm of the same polymer in a amorphous, ablated, or quasi-amorphous state and adhered to said at least one surface a second polymer less penetrable by said plasticizer than said semicrystalline polymer or copolymer.

**52.** The article of claim 51 wherein said polymer or copolymer comprises poly(vinyl chloride) and said migratory material comprises a plasticizer.

**Revendications**

**1.** Article polymérique comprenant un polymère semi-cristallin comportant, sur au moins l'une de ses surfaces, des aires ayant des épaisseurs d'au moins 5 nm du même polymère dans un état quasi-amorphe.

**2.** Article suivant la revendication 1, dans lequel au moins 1 % d'au moins la surface susdite est quasi-amorphe, et le rapport oxygène/carbone, atome/atome, des aires quasi-amorphes est le même ou inférieur à ce rapport dans le polymère semi-cristallin.

**3.** Article suivant l'une quelconque des revendications précédentes, dans lequel les aires susdites ont une profondeur d'au moins 10 nm et forment de 5 à 100 % d'au moins la surface susdite.

**4.** Article suivant l'une quelconque des revendications précédentes, dans lequel le polymère semi-cristallin est sous la forme d'une couche, d'une feuille, d'un film ou d'un revêtement.

**5.** Article suivant l'une quelconque des revendications précédentes, dans lequel les aires susdites constituent de 30 à 100 % d'au moins la surface précitée, et le rapport oxygène/carbone, atome/atome, des aires quasi-amorphes est le même ou inférieur à ce rapport dans le polymère semi-cristallin.

**6.** Article suivant la revendication 5, dans lequel les aires susdites constituent de 80 à 100 % d'au moins la surface susdite.

**7.** Article suivant l'une quelconque des revendications précédentes, dans lequel l'aire quasi-amorphe a une épaisseur d'au moins 5 nm, commençant à la surface de cet article polymère.

**8.** Article suivant l'une quelconque des revendications précédentes, dans lequel l'aire quasi-amorphe a une épaisseur comprise entre 20 et 500 nm.

**9.** Article suivant l'une quelconque des revendications précédentes, dans lequel l'aire quasi-amorphe a une épaisseur de l'ordre de 5 à 10.000 nm.

**10.** Article suivant l'une quelconque des revendications précédentes, dans lequel l'aire quasi-amorphe a une densité optique, en l'absence de colorants ou de pigments, qui diffère de celle du polymère semi-cristallin de moins de 0,1 dans la région visible du spectre électromagnétique.

**11.** Article suivant l'une quelconque des revendications précédentes, dans lequel le polymère semi-cristallin contient au moins 0,05 % en poids d'un colorant ou d'un pigment absorbant les rayonnements.

**12.** Article suivant l'une quelconque des revendications précédentes, dans lequel le polymère semi-cristallin consiste en un polymère choisi parmi un poly(chlorure de vinyle), un poly(chlorure de vinylidène), un polytétrafluoréthylène, un nylon, un polyuréthanne, un polyester, une polyoléfine et leurs copolymères.

**13.** Article suivant l'une quelconque des revendications précédentes, dans lequel la surface est lisse et a une réflectance de 9 % ou moins à un rayonnement de 550 nm suivant un angle incident compris entre 80 et 90°.

**14.** Article polymérique suivant l'une quelconque des revendications précédentes, dans lequel les aires précitées, dans un état quasi-amorphe, sont caractérisées par un ordonnancement de courte portée du polymère, compatible avec un état amorphe de ce polymère, et par un ordonnancement de longue portée du polymère, compatible avec un état semi-cristallin de ce polymère.

**15.** Procédé de modification de la surface d'un polymère semi-cristallin, qui comprend l'irradiation d'au moins une surface d'une composition de polymère semi-cristallin par un rayonnement qui est absorbé par cette composition, le réglage de l'intensité et de la fluence de cette exposition à un rayonnement de manière que le polymère semi-cristallin se trouvant sur la surface susdite soit fondu, en permettant à ce polymère fondu de refroidir à une allure qui formera une aire polymérique quasi-amorphe sur au moins la surface susdite, ce procédé étant caractérisé en ce qu'il y a une ablation ou une volatilisation de moins de 1 % en poids du poids total du polymère à l'intérieur des régions de ce polymère, qui sont fondues.

**16.** Procédé de modification de la surface d'un polymère semi-cristallin, qui comprend l'irradiation d'au moins une surface d'une composition de polymère semi-cristallin par un rayonnement qui est absorbé par cette composition, le réglage de l'intensité et de la fluence de cette exposition à un rayonnement, de manière que le polymère semi-cristallin se trouvant sur la surface susdite soit fondu, en permettant à ce polymère fondu de refroidir à une allure qui formera une aire polymérique quasi-amorphe sur au moins la surface susdite, de sorte qu'un ordonnancement à longue portée ou long terme, typique d'une structure polymérique, cristalline, est maintenu dans la surface quasi-amorphe formée par la fusion et le refroidissement précités.

**17.** Procédé de modification de la surface d'un polymère semi-cristallin, qui comprend l'irradiation d'au moins une surface d'une composition de polymère semi-cristallin par un rayonnement qui est absorbé par la composition susdite, le réglage de l'intensité et de la fluence de cette exposition à un rayonnement de manière que le polymère semi-cristallin se trouvant sur la surface susdite soit fondu, en permettant à ce polymère fondu de refroidir à une allure qui formera une aire polymère quasi-amorphe sur au moins la surface susdite, cette aire polymérique quasi-amorphe ayant une mémoire latente pour l'orientation cristalline de cette composition de polymère semi-cristallin.

**18.** Procédé de modification de la surface d'un polymère semi-cristallin, qui comprend l'irradiation d'au moins une surface d'une composition de polymère semi-cristallin par un rayonnement qui est absorbé par cette composition, le réglage de l'intensité et de la fluence de cette exposition à un rayonnement, de sorte que le polymère semi-cristallin se trouvant sur cette surface est fondu, en permettant à ce polymère fondu de refroidir à une allure qui formera une aire polymère quasi-amorphe sur au moins la surface susdite, une certaine orientation moléculaire étant entretenue dans cette surface quasi-amorphe formée par la fusion et le refroidissement précités.

**19.** Procédé suivant l'une quelconque des revendications 14, 15, 16, 17 et 18, dans lequel la fusion susdite se développe jusqu'à une profondeur d'au moins 5 nm, et dans lequel la fusion se produit sur une aire

d'au moins 30 à 100 % d'au moins la surface susdite.

**20.** Procédé suivant l'une quelconque des revendications 15 à 19, dans lequel le rayonnement précité est choisi parmi un rayonnement ultraviolet, un rayonnement par lumière visible et un rayonnement infrarouge.

**21.** Procédé suivant l'une quelconque des revendications 15 à 20, dans lequel il y a un colorant ou un pigment dans le polymère précité pour absorber le rayonnement susdit.

**22.** Procédé suivant l'une quelconque des revendications 15 à 21, dans lequel 80 à 100 % de l'aire superficielle d'au moins la surface susdite sont rendus quasi-amorphes jusqu'à une profondeur de 20 à 250 mm, et dans lequel le polymère semi-cristallin est formé par un polymère choisi parmi un poly-(chlorure de vinyle), un polyester, un poly(chlorure de vinylidène), un poly(tétrafluoréthylène), un nylon, un polyuréthanne et une polyoléfine.

**23.** Procédé suivant l'une quelconque des revendications 15 à 22, dans lequel au moins la surface précitée est rendue quasi-amorphe de manière que la densité optique existant dans la région visible du spectre électromagnétique de ce polymère, après que la surface a été rendue quasi-amorphe, sans considération des effets optiques des colorants ou des pigments dans ce polymère semi-cristallin, se situe dans les limites de 0,1 par rapport à la densité optique avant que la surface soit rendue quasi-amorphe.

**24.** Procédé suivant l'une quelconque des revendications 15 à 23, dans lequel le rapport oxygène/carbone, atome/atome, des aires quasi-amorphes est le même ou inférieur à celui existant dans le polymère semi-cristallin.

**25.** Procédé suivant l'une quelconque des revendications 15 à 24, dans lequel le rayonnement utilisé est un rayonnement ultraviolet.

**26.** Procédé suivant l'une quelconque des revendications 15 à 25, dans lequel le polymère est chauffé au-dessus de 30 ° C durant l'irradiation.

**27.** Procédé suivant l'une quelconque des revendications 15 à 26, dans lequel la surface comportant des aires quasi-amorphes est traitée par décharge par effet de couronne après irradiation.

**28.** Procédé suivant l'une quelconque des revendications 15 à 27, dans lequel l'irradiation se fait par des impulsions de moins de 100 microsecondes.

**29.** Procédé suivant l'une quelconque des revendications 15 à 28, pour la modification de la surface d'un polymère semi-cristallin, ce procédé comprenant en outre l'exposition de la couche superficielle susdite à un solvant liquide qui favorise la cristallisation à l'intérieur de l'aire quasi-amorphe susdite ou expose le polymère semi-cristallin sous-jacent.

**30.** Procédé suivant l'une quelconque des revendications 15 à 29, dans lequel la fluence du rayonnement précité est de l'ordre de 3 à 25 $mJ/cm^2$/impulsion.

**31.** Procédé suivant la revendication 30, dans lequel la fluence susdite est de 5 $mJ/cm^2$/impulsion.

**32.** Procédé suivant la revendication 22, dans lequel le polymère susdit consiste en du téréphtalate de polyéthylène.

**33.** Procédé de réduction des coefficients cinétique et statique de friction pour une surface de polymère, comprenant la préparation d'un article de polymère suivant l'une quelconque des revendications 1 à 14, et ensuite l'exposition d'au moins la surface précitée à un solvant liquide favorisant une cristallisation à l'intérieur des zones précitées.

**34.** Procédé de liaison de l'article polymérique de l'une quelconque des revendications 1 à 14, comportant un adhésif sur au moins la surface précitée, ce procédé comprenant la mise en contact de la matière adhésive sur une autre surface sous des conditions de chaleur, de pression ou d'autre énergie

appliquée, qui sont suffisantes pour provoquer une liaison de l'adhésif à cette autre surface.

**35.** Article polymérique suivant l'une quelconque des revendications 1 à 14, comportant un film continu comprenant un polymère organique sur au moins la surface susdite et un adhésif adhérant à ce polymère organique.

**36.** Article suivant la revendication 35, dans lequel le polymère semi-cristallin contient un plastifiant, et le polymère organique précité est moins pénétrable par le plastifiant susdit que le polymère semi-cristallin.

**37.** Article suivant la revendication 36, dans lequel le polymère semi-cristallin est constitué par du poly-(chlorure de vinyle), et l'adhésif est un adhésif sensible à la pression.

**38.** Article suivant la revendication 37, dans lequel l'adhésif sensible à la pression comprend un polyacrylate ou un polyuréthanne.

**39.** Procédé de soudage thermique de deux articles, ce procédé consistant à prévoir au moins un article polymérique suivant l'une quelconque des revendications 1 à 14, et à chauffer ensuite au moins la surface susdite de cet article polymère, tandis qu'il est en contact avec un autre article.

**40.** Procédé suivant la revendication 39 pour le soudage thermique de deux articles, dans lequel le chauffage se fait jusqu'à une température supérieure à la température Tg du polymère, et les zones susdites du polymère quasi-amorphe cristallisent au refroidissement.

**41.** Article polymérique suivant l'une quelconque des revendications 1 à 14, dans lequel au moins la surface précitée comporte une matière distribuée de façon discontinue à la manière d'une image, sur au moins une portion de cette surface, ce qui donne une densité optique par transmission ou réflexion d'au moins 0,2.

**42.** Article suivant la revendication 41, dans lequel la matière est choisie parmi les encres, les toners, les colorants et les pigments.

**43.** Procédé suivant la revendication 15, dans lequel il y a ablation ou volatilisation de moins de 0,1 % en poids du poids total du polymère, et dans lequel une matière est amenée à adhérer à au moins la surface précitée, ce qui donne une densité optique par transmission ou réflexion d'au moins 0,2.

**44.** Article polymérique, comprenant un polymère ou copolymère semi-cristallin suivant l'une quelconque des revendications 1 à 14, contenant au moins un ingrédient migratoire et, dans un état adhérant à au moins la surface précitée, un second polymère moins pénétrable par l'ingrédient migratoire susdit que le polymère ou polymère semi-cristallin.

**45.** Article suivant la revendication 44, dans lequel le polymère ou le copolymère comprend du poly-(chlorure de vinyle).

**46.** Article suivant la revendication 45, dans lequel la matière migratoire susdite comprend un plastifiant.

**47.** Procédé de réduction de la migration de matières migratoires depuis un film comportant un polymère semi-cristallin, ce procédé comprenant la modification de la surface d'un polymère semi-cristallin en mettant en oeuvre le procédé tel que décrit dans l'une quelconque des revendications 15 à 32, et ensuite le revêtement d'au moins la surface susdite par un polymère qui est moins pénétrable par la matière migratoire précitée que la composition susdite.

**48.** Procédé suivant la revendication 47, dans lequel la fusion se fait jusqu'à une profondeur d'au moins 5 nm, et dans lequel le polymère comprend du poly(chlorure de vinyle).

**49.** Procédé suivant la revendication 47, dans lequel la fusion se développe jusqu'à une profondeur d'au moins 10 nm, le polymère susdit comprenant du poly(chlorure de vinyle), et la matière migratoire précitée comprend un plastifiant.

**50.** Procédé suivant l'une quelconque des revendications 47 à 49, dans lequel le second polymère précité comprend un polymère acrylique ou un polyuréthanne.

**51.** Article polymérique suivant l'une quelconque des revendications 1 à 14, dans lequel le polymère semi-cristallin précité est un polymère ou copolymère semi-cristallin contenant au moins un ingrédient migratoire comportant sur au moins l'une de ses surfaces des aires ayant des épaisseurs d'au moins 5 nm du même polymère dans un état amorphe, ablati ou quasi-amorphe, et, adhérant à au moins cette surface, un second polymère moins pénétrable par le plastifiant que le polymère ou copolymère semi-cristallin.

**52.** Article suivant la revendication 51, dans lequel le polymère ou copolymère susdit comprend du poly-(chlorure de vinyle) et la matière migratoire précitée comprend un plastifiant.

## Patentansprüche

**1.** Polymerer Gegenstand mit einem halbkristallinen Polymer, der auf wenigstens einer Oberfläche Bereiche mit einer Dicke von mindestens 5 nm desselben Polymers in einem quasi-amorphen Zustand aufweist.

**2.** Gegenstand nach Anspruch 1, dadurch gekennzeichnet, daß mindestens 1% der wenigstens einen Oberfläche quasi-amorph ist und das Atom/Atom-Verhältnis bzw. das Sauerstoff/Kohlenstoff-Verhältnis der quasi-amorphen Bereiche gleich oder kleiner ist als dieses Verhältnis in dem halbkristallinen Polymer.

**3.** Gegenstand nach einem der vorhergehenden Ansprüche, dadurch gekennzeichnet, daß diese Bereiche eine Tiefe von mindestens 10 nm besitzen und 5 bis 100 % der wenigstens einen Oberfläche umfassen.

**4.** Gegenstand nach einem der vorhergehenden Ansprüche, dadurch gekennzeichnet, daß das halbkristalline Polymer in Form einer Schicht, einer Folie, eines Films oder eines Überzugs vorliegt.

**5.** Gegenstand nach einem der vorhergehenden Ansprüche, dadurch gekennzeichnet, daß die Flächen 30 bis 100 % der wenigstens einen Oberfläche umfassen, und das Atom/Atom-Verhältnis bzw. das Sauerstoff/Kohlenstoff-Verhältnis der quasi-amorphen Bereiche gleich oder kleiner ist als dieses Verhältnis in dem halbkristallinen Polymer.

**6.** Gegenstand nach Anspruch 5, dadurch gekennzeichnet, daß die Bereiche 80 bis 100 % der wenigstens einen Oberfläche umfassen.

**7.** Gegenstand nach einem der vorhergehenden Ansprüche, dadurch gekennzeichnet, daß der quasi-amorphe Bereich eine Dicke von mindestens 5 nm besitzt, beginnend an der Oberfläche des polymeren Gegenstandes.

**8.** Gegenstand nach einem der vorhergehenden Ansprüche, dadurch gekennzeichnet, daß der quasi-amorphe Bereich eine Dicke zwischen 20 und 500 nm besitzt.

**9.** Gegenstand nach einem der vorhergehenden Ansprüche, dadurch gekennzeichnet, daß der quasi-amorphe Bereich eine Dicke im Bereich von 5 bis 10.000 nm besitzt.

**10.** Gegenstand nach einem der vorhergehenden Ansprüche, dadurch gekennzeichnet, daß der quasi-amorphe Bereich in Abwesenheit von Farbstoffen oder Pigmenten eine optische Dichte aufweist, die sich von der des halbkristallinen Polymers um weniger als 0,1 im sichtbaren Bereich des elektromagnetischen Spektrums unterscheidet.

**11.** Gegenstand nach einem der vorhergehenden Ansprüche, dadurch gekennzeichnet, daß das halbkristalline Polymer mindestens 0,05 Gew.-% eines strahlungsabsorbierenden Farbstoffs oder Pigments enthält.

**12.** Gegenstand nach einem der vorhergehenden Ansprüche, dadurch gekennzeichnet, daß das halbkristalline Polymer ein Polymer enthält, das ausgewählt ist aus Poly(vinylchlorid), Poly(vinylidenchlorid), Polytetrafluorethylen, Nylon, Polyurethan, Polyester, Polyolefin, und aus Copolymeren derselben.

**13.** Gegenstand nach einem der vorhergehenden Ansprüche, dadurch gekennzeichnet, daß die Oberfläche glatt ist und ein Reflexionsvermögen von 9% oder weniger besitzt bei einer Strahlung von 550 nm mit einem Einfallswinkel zwischen 80 und 90°.

**14.** Polymerer Gegenstand nach einem der vorhergehenden Ansprüche, wobei die Bereiche in einem quasi-amorphen Zustand dadurch gekennzeichnet sind, daß sie einen Nahordnungsgrad des Polymers aufweisen, der einem amorphen Zustand des Polymers entspricht, und daß sie einen Fernordnungsgrad des Polymers aufweisen, der einem halbkristallinen Zustand des Polymers entspricht.

**15.** Verfahren zur Modifizierung der Oberfläche eines halbkristallinen Polymers, wobei das Verfahren folgende Schritte umfaßt: Bestrahlen von wenigstens einer Oberfläche einer halbkristallinen Polymerzusammensetzung mit Strahlung, die von der Zusammensetzung absorbiert wird, Steuern der Intensität und Fluenz dieser Strahlung, Bestrahlung derart, daß das halbkristalline Polymer auf der Oberfläche geschmolzen wird, und Abkühlen des geschmolzenen Polymers mit einer Geschwindigkeit, bei der ein quasi-amorpher polymerer Bereich auf der wenigstens einen Oberfläche entsteht, dadurch gekennzeichnet, daß es zu einer Ablation oder Verflüchtigung von weniger als 1 Gew.-% des Gesamtgewichts des Polymers kommt in Bereichen des Polymers, die geschmolzen werden.

**16.** Verfahren zur Modifizierung der Oberfläche eines halbkristallinen Polymers, wobei das Verfahren folgende Schritte umfaßt: Bestrahlen von wenigstens einer Oberfläche einer halbkristallinen Polymerzusammensetzung mit Strahlung, die von der Zusammensetzung absorbiert wird, Steuern der Intensität und Fluenz der Strahlung, Bestrahlung derart, daß das halbkristalline Polymer auf der Oberfläche geschmolzen wird, und Abkühlen des geschmolzenen Polymers mit einer Geschwindigkeit, bei der ein quasi-amorpher polymerer Bereich auf der wenigstens einen Oberfläche entsteht, so daß ein für eine kristalline Polymerstruktur typischer Fernordnungsgrad in der quasi-amorphen Oberfläche aufrechterhalten wird, die durch das Schmelzen und Abkühlen entstanden ist.

**17.** Verfahren zur Modifizierung der Oberfläche eines halbkristallinen Polymers, wobei das Verfahren folgende Schritte umfaßt: Bestrahlen von wenigstens einer Oberfläche einer halbkristallinen Polymerzusammensetzung mit Strahlung, die von der Zusammensetzung absorbiert wird, Steuern der Intensität und Fluenz der Strahlung, Bestrahlung derart, daß das halbkristalline Polymer auf der Oberfläche geschmolzen wird, und Abkühlen des geschmolzenen Polymers mit einer Geschwindigkeit, bei der ein quasi-amorpher polymerer Bereich auf der wenigstens einen Oberfläche entsteht, wobei der quasi-amorphe polymere Bereich ein latentes Gedächtnis hat für die kristalline Orientierung der halbkristallinen Polymerzusammensetzung.

**18.** Verfahren zur Modifizierung der Oberfläche eines halbkristallinen Polymers, wobei das Verfahren folgende Schritte umfaßt: Bestrahlen von wenigstens einer Oberfläche einer halbkristallinen Polymerzusammensetzung mit Strahlung, die von der Zusammensetzung absorbiert wird, Steuern der Intensität und Fluenz der Strahlung, Bestrahlung derart, daß das halbkristalline Polymer auf der Oberfläche geschmolzen wird, und Abkühlen des geschmolzenen Polymers mit einer Geschwindigkeit, bei der ein quasi-amorpher polymerer Bereich auf der wenigstens einen Oberfläche entsteht, wobei eine molekulare Orientierung in der durch das Schmelzen und Abkühlen entstandenen quasi-amorphen Oberfläche aufrechterhalten wird.

**19.** Verfahren nach einem der Ansprüche 14, 15, 16, 17 und 18, dadurch gekennzeichnet, daß das Schmelzen bis in eine Tiefe von mindestens 5 nm erfolgt, und daß das Schmelzen auf einem Bereich von mindestens 30 bis 100 % der wenigstens einen Oberfläche erfolgt.

**20.** Verfahren nach einem der Ansprüche 15 bis 19, dadurch gekennzeichnet, daß die Strahlung ausgewählt ist aus ultravioletter Strahlung, sichtbarer Strahlung und Infrarotstrahlung.

**21.** Verfahren nach einem der Ansprüche 15 bis 20, dadurch gekennzeichnet, daß ein Farbstoff oder Pigment in dem Polymer enthalten ist, um die Strahlung zu absorbieren.

**22.** Verfahren nach einem der Ansprüche 15 bis 21, dadurch gekennzeichnet, daß 80 bis 100 % der Fläche der wenigstens einen Oberfläche bis in eine Tiefe von 20 bis 250 nm quasi-amorph gemacht wird, und daß das halbkristalline Polymer ein Polymer umfaßt, das ausgewählt ist aus Poly(vinylchlorid), Polyester, Poly(vinylidenchlorid), Poly(tetrafluorethylen), Nylon, Polyurethan und Polyolefin.

**23.** Verfahren nach einem der Ansprüche 15 bis 22, dadurch gekennzeichnet, daß die wenigstens eine Oberfläche quasi-amorph gemacht wird, so daß die optische Dichte im sichtbaren Bereich des elektromagnetischen Spektrums des Polymers, nachdem die Oberfläche quasi-amorph gemacht wurde, ohne Berücksichtigung der optischen Wirkungen von Farbstoffen oder Pigmenten in dem halbkristallinen Polymer, innerhalb von 0,1 der optischen Dichte liegt, bevor die Oberfläche quasi-amorph gemacht wurde.

**24.** Verfahren nach einem der Ansprüche 15 bis 23, dadurch gekennzeichnet, daß das Atom/Atom-Verhältnis bzw. das Sauerstoff/Kohlenstoff-Verhältnis der quasi-amorphen Bereiche gleich oder kleiner ist als das in dem halbkristallinen Polymer.

**25.** Verfahren nach einem der Ansprüche 15 bis 24, dadurch gekennzeichnet, daß die verwendete Strahlung ultraviolette Strahlung ist.

**26.** Verfahren nach einem der Ansprüche 15 bis 25, dadurch gekennzeichnet, daß das Polymer während des Bestrahlens auf über 30 °C aufgeheizt wird.

**27.** Verfahren nach einem der Ansprüche 15 bis 26, dadurch gekennzeichnet, daß die Oberfläche mit quasi-amorphen Bereichen nach dem Bestrahlen mit Koronaentladung behandelt wird.

**28.** Verfahren nach einem der Ansprüche 15 bis 27, dadurch gekennzeichnet, daß das Bestrahlen durch Impulse von weniger als 100 Mikrosekunden erfolgt.

**29.** Verfahren nach einem der Ansprüche 15 bis 28 zur Modifizierung der Oberfläche eines halbkristallinen Polymers, wo bei dem Verfahren ferner die Oberflächenschicht einem flüssigen Lösungsmittel ausgesetzt wird, welches die Kristallisation in dem quasi-amorphen Bereich beschleunigt oder das darunterliegende halbkristalline Polymer belichtet.

**30.** Verfahren nach einem der Ansprüche 15 bis 29, dadurch gekennzeichnet, daß die Fluenz der Strahlung im Bereich von 3 bis 25 $mJ/cm^2$/Impuls liegt.

**31.** Verfahren nach Anspruch 30, dadurch gekennzeichnet, daß die Fluenz 5 $mJ/cm^2$/Impuls beträgt.

**32.** Verfahren nach Anspruch 22, dadurch gekennzeichnet, daß das Polymer Polyethylenterephthalat enthält.

**33.** Verfahren zur Reduzierung des kinetischen und statischen Reibungskoeffizienten einer polymeren Oberfläche, bei dem ein polymerer Gegenstand nach einem der Ansprüche 1 bis 14 vorgesehen wird und dann wenigstens eine Oberfläche einem flüssigen Lösungsmittel ausgesetzt wird, das die Kristallisation innerhalb dieser Bereiche beschleunigt.

**34.** Verfahren zum Kleben des polymeren Gegenstandes nach einem der Ansprüche 1 bis 14, der einen Klebstoff auf der wenigstens einen Oberfläche aufweist, wobei das Verfahren die folgenden Schritte umfaßt: das Klebstoffmaterial wird mit einer anderen Oberfläche in Berührung gebracht unter Erwärmung, mit Druck oder durch Einwirkung einer sonstigen Kraft, die ausreicht, den Klebstoff mit der anderen Oberfläche zu verkleben.

**35.** Polymerer Gegenstand nach einem der Ansprüche 1 bis 14 mit einer durchgehenden Folie, die ein organisches Polymer auf der wenigstens einen Oberfläche aufweist und einen Klebstoff, der auf das organische Polymer aufgetragen ist.

**36.** Gegenstand nach Anspruch 35, dadurch gekennzeichnet, daß das halbkristalline Polymer einen Weichmacher enthält, und das organische Polymer weniger durchlässig ist für den Weichmacher als das

halbkristalline Polymer.

**37.** Gegenstand nach Anspruch 36, dadurch gekennzeichnet, daß das halbkristalline Polymer Poly-(vinylchlorid) enthält, und der Klebstoff ein druckempfindlicher Klebstoff ist.

**38.** Gegenstand nach Anspruch 37, dadurch gekennzeichnet, daß der druckempfindliche Klebstoff ein Polyacrylat oder Polyurethan enthält.

**39.** Verfahren zum Heißverkleben zweier Gegenstände, wobei das Verfahren die folgenden Schritte umfaßt: Vorsehen von wenigstens einem polymeren Gegenstand nach einem der Ansprüche 1 bis 14, und dann Aufheizen der wenigstens einen Oberfläche des polymeren Gegenstandes, während dieser mit einem anderen Gegenstand in Kontakt ist.

**40.** Verfahren nach Anspruch 39 zum Heißverkleben zweier Gegenstände, dadurch gekennzeichnet, daß auf eine Temperatur über dem Transformationspunkt des Polymers aufgeheizt wird, und die Bereiche aus quasi-amorphem Polymer beim Abkühlen auskristallisieren.

**41.** Polymerer Gegenstand nach einem der Ansprüche 1 bis 14, dadurch gekennzeichnet, daß die wenigstens eine Oberfläche ein bildweise, diskontinuierlich verteiltes Material auf wenigstens einem Teil der Oberfläche aufweist, das eine Lichtdurchlässigkeit oder eine optische Reflexionsdichte von mindestens 0,2 ergibt.

**42.** Gegenstand nach Anspruch 41, dadurch gekennzeichnet, daß das Material ausgewählt ist aus Tinten, Tonern, Farbstoffen und Pigmenten.

**43.** Verfahren nach Anspruch 15, dadurch gekennzeichnet, daß eine Ablation oder Verflüchtigung von weniger als 0,1 Gew.-% des Gesamtgewichts des Polymers besteht, und daß ein Material an der wenigstens einen Oberfläche haftet, welches eine Lichtdurchlässigkeit oder optische Reflexionsdichte von mindestens 0,2 ergibt.

**44.** Polymerer Gegenstand, umfassend ein halbkristallines Polymer oder Copolymer nach einem der Ansprüche 1 bis 14, welches mindestens einen wandernden Bestandteil enthält und an der wenigstens einen Oberfläche eines zweiten Polymers haftet, das für den wandernden Bestandteil weniger durchlässig ist als das halbkristalline Polymer oder Copolymer.

**45.** Gegenstand nach Anspruch 44, dadurch gekennzeichnet, daß das Polymer oder Copolymer Poly-(vinylchlorid) enthält.

**46.** Gegenstand nach Anspruch 45, dadurch gekennzeichnet, daß das wandernde Material einen Weichmacher enthält.

**47.** Verfahren zum Reduzieren des Wanderns von wandernden Materialien aus einem Film, der ein halbkristallines Polymer enthält, wobei bei dem Verfahren die Oberfläche eines halbkristallinen Polymers modifiziert wird mit Hilfe des in einem der Ansprüche 15 bis 32 beschriebenen Verfahrens, und dann die wenigstens eine Oberfläche mit einem Polymer überzogen wird, das weniger durchlässig ist für das wandernde Material in der Zusammensetzung als die Zusammensetzung selbst.

**48.** Verfahren nach Anspruch 47, dadurch gekennzeichnet, daß das Schmelzen bis in eine Tiefe von mindestens 5 nm erfolgt, und das Polymer Poly(vinylchlorid) enthält.

**49.** Verfahren nach Anspruch 47, dadurch gekennzeichnet, daß das Schmelzen bis in eine Tiefe von mindestens 10 nm erfolgt, das Polymer Poly(vinylchlorid) enthält, und das wandernde Material einen Weichmacher enthält.

**50.** Verfahren nach einem der Ansprüche 47 bis 49, dadurch gekennzeichnet, daß das zweite Polymer ein Acrylpolymer oder Polyurethan enthält.

**51.** Polymerer Gegenstand nach einem der Ansprüche 1 bis 14, dadurch gekennzeichnet, daß das

halbkristalline Polymer ein halbkristallines Polymer oder Copolymer ist, das mindestens einen wandernden Bestandteil enthält, der auf wenigstens einer Oberfläche Bereiche mit einer Dicke von mindestens 5 nm dieses Polymers in einem amorphen, einer Ablation unterworfenen oder quasi-amorphen Zustand aufweist, und an der wenigstens einen Oberfläche eines zweiten Polymers haftet, das weniger durchlässig ist für den Weichmacher als das halbkristalline Polymer oder Copolymer.

**52.** Gegenstand nach Anspruch 51, dadurch gekennzeichnet, daß das Polymer oder Copolymer Poly-(vinylchlorid) enthält, und das wandernde Material einen Weichmacher enthält.

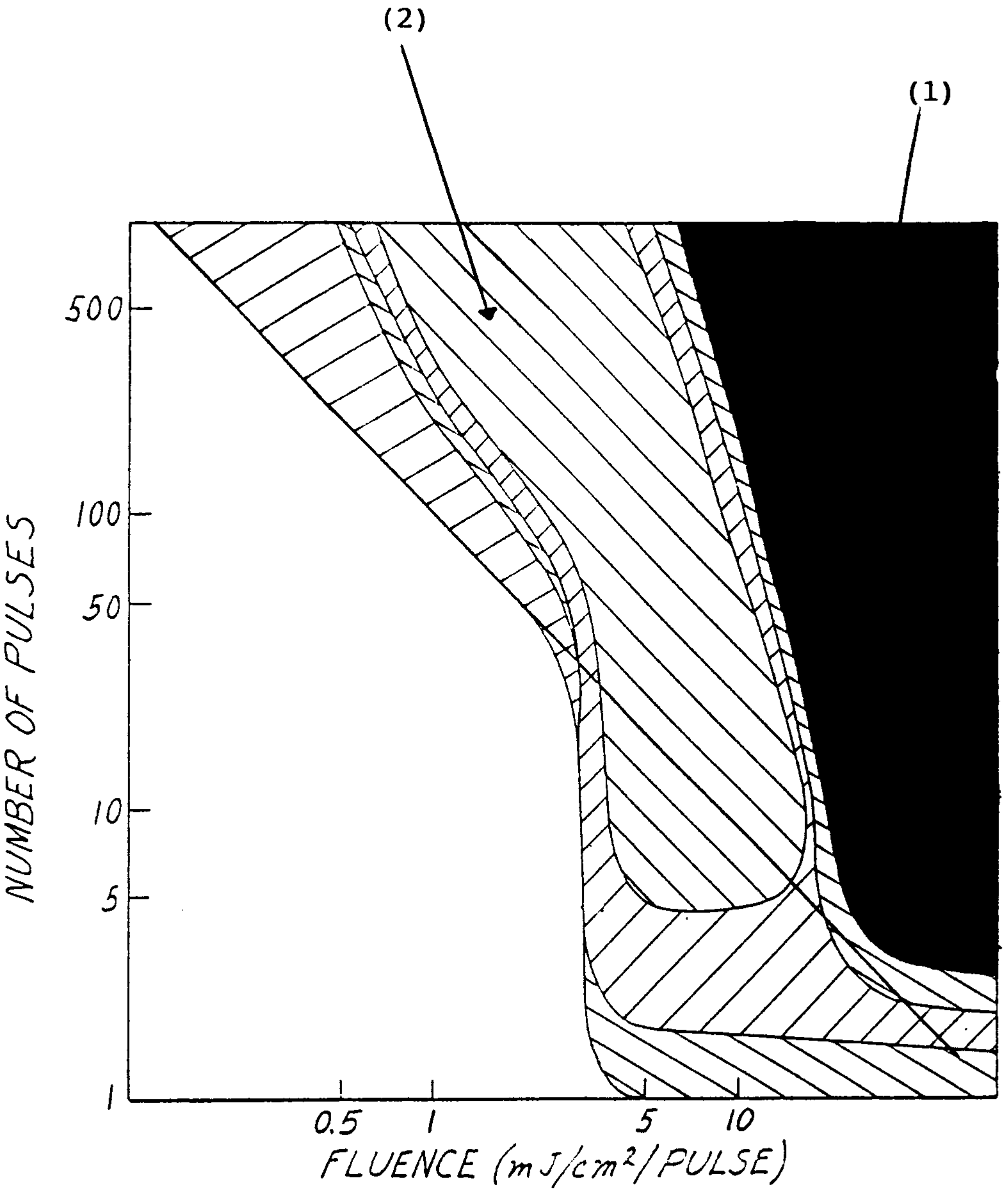
(2)
(1)
500
100
50
10
5
1
0.5
1
5
10
NUMBER OF PULSES
FLUENCE (mJ/cm²/PULSE)